# EUROPEAN PATENT SPECIFICATION

(11) **EP 4 653 128 B1**
(45) Date of publication and mention of the grant of the patent: **16.09.2026**
(21) Application number: 24382550.2
(22) Date of filing: 23.05.2024
(51) Int. Cl.: B23K 26/34, B23K 26/362, F16D 65/12

(54) **METHOD FOR MANUFACTURING A BRAKE DISK**
VERFAHREN ZUR HERSTELLUNG EINER BREMSSCHEIBE
PROCÉDÉ DE FABRICATION D'UN DISQUE DE FREIN

(43) Date of publication of application: 26.11.2025
(73) Proprietor: Talens Systems SLU, 20870 Guipúzcoa (ES)
(72) Inventor: GABILONDO, Jose Juan, 20870 ELGOIBAR (Guipúzcoa) (ES); ALVAREZ, Piera, 20870 ELGOIBAR (Guipúzcoa) (ES); AZPELETA GABILONDO, María, 20870 ELGOIBAR (Guipúzcoa) (ES)
(74) Representative: Balder IP Law, S.L.

(56) References cited:
- DE-A1- 102021 130 045
- US-A1- 2013 153 345
- US-A1- 2024 044 382

## Description

### TECHNICAL FIELD

The present disclosure relates to the field of brake disks for friction brakes of vehicles, in particular motor vehicles, such as land motor vehicles. More specifically, the present disclosure relates to the manufacturing of such brake disks. The disclosure is particularly advantageous for manufacturing processes involving an energy beam, such as a laser energy beam.

### STATE OF THE ART

Friction brakes comprise a rotatable element, such as brake drum or a brake disk. A brake disk typically comprises two outer friction surfaces opposing each other. These surfaces are usually circular ring-shaped surfaces. During a braking operation, these surfaces are pressed against a brake pad so that the brake disk is braked.

Brake disks are usually made of a core part of a metallic material (base material), such as cast iron, which is a relatively low-cost material having several properties which make it suitable for the manufacturing of brake disks, such as high melting point, good heat storage capacity, good conductivity and good ability to be machined.

It is well-known to apply a wearing coat, being more resistant to wear and corrosion than the base material, to the base material of the brake disk. Such coat is usually also aimed at increasing the friction coefficient of the brake disk. Apart from these reasons inherently associated with the efficiency of the brake disk, there is currently a requirement of the market to produce brake disks which produce minimum fine dust emissions (the Euro 7 emission rules for motor vehicles). For all these reasons, the application of the wearing coat must be optimized so that both the efficiency of the brake disk in terms of resistance to wear and friction coefficient, and its low emission requirements, are achieved.

The coating can be a powder coating, meaning that a coating material, prior to being applied to the friction surfaces, is in the form of powder, in such a way that during the application of the coating, or shortly beforehand, the powder to be applied is melted by applying heat, and thus it combines with the base material of the brake disk, forming a surface layer on it. The powder can for example be applied to the friction surfaces using a laser cladding process. Examples of well-known materials used as coating are metals combined with carbides. The applied wearing coat must have good bonding capabilities to the base material of the brake disk.

However, it has been observed that the adherence between the wearing coat and the base material of the brake disk, particularly when the base material is cast iron, is usually poor due to the presence of graphite in the cast iron, in particular, in the form of lamellar graphite and/or spherical or quasi-spherical graphite flakes. For example, due to the high power of the laser beam applied in a laser cladding process used for coating a cast iron part with a metallic material provided in powder form, the graphite lamellae included in the cast iron, in particular in its upper surface, are evaporated, creating cracks, hollow areas and bubbles inside the coating being applied, thus adding defects that reduce the adhesion between the wear coat and the surface of the base material. Consequently, these defects cause different imperfections in the coating layer, such as voids or discontinuities in the coating layer and irregular (i.e. non-flat) coating surface. Therefore, to improve the reliability of the wear coating process, there is a need to reduce the amount of lamellar graphite in the surface of the base material of the brake disk.

Different techniques have been proposed to reduce the amount of graphite from the surface of the base material of a brake disk. For example, prior to applying such coating on the base material, the base material can be pretreated. US2013/0153345A1 mentions detaching and removing the graphite component from the friction surface by subjecting the brake element to an ultrasound treatment or by applying a laser beam treatment. US2014/0262642A1 mentions a method for producing a brake disk including, prior to applying a wearing coat, pretreating the contact surface of the base material of the brake disk. This pretreatment can include modifying the surface topography with laser irradiation, for example to remove organic deposits. DE102010048075A1 and DE102011056307A1 mention different techniques for forming a graphite-free friction surface layer, including by laser treatment. Document US 2013/153345 discloses a method, in which the graphite is removed from open cavities of the cast iron, e.g., by an ultrasound or laser treatment, in order to improve an adhesion of a thermal powder coating subsequently applied on friction surfaces of the brake disk.

However, all the cited references are silent about how such laser treatments must indeed be applied to eventually achieve the desired result.

Therefore, there is a need to improve current methods of manufacturing brake disks, so that the amount of graphite in the base material of the brake disk, specially in the proximity to the surface thereof, is reduced with a view to applying thereon by a laser cladding deposition process a coating layer having higher performance than that of conventional brake disks. It is therefore desirable to obtain a brake disk with improved adherence between coating layer and base material of the brake disk, thus enhancing the reliability of the wear coating layer.

### DESCRIPTION OF THE INVENTION

The method for manufacturing a brake disk and the brake disk manufactured following the method described in the present disclosure intend to solve the shortcomings of prior art manufacturing processes of brake disks and obtainable brake disks.

It is an aim of the present disclosure to obtain a brake disk having increased efficiency, in particular having one or more friction surfaces with increased resistance to wear and corrosion and increased friction coefficient. The increased efficiency must be obtained without substantially compromising the homogeneity of the disk substrate beneath its uppermost (superficial) portion.

The brake disk of this disclosure is manufactured from a substrate, base material or basic body (from now on, the substrate) made of a graphite-containing metallic material. The substrate may, for example, be cast or forged from suitable materials, such as grey cast iron, cast steel, forged steel, spheroidal graphite cast iron, etc. The substrate is preferably made of grey cast iron. The metallic material of which the substrate is made contains graphite, often in the form of lamellae. This is typical, for example, but not limiting, of the grey cast iron. The substrate is a rotatable element having two substantially flat surfaces opposing each other. These surfaces are usually circular ring-shaped surfaces.

At least one coating layer is deposited onto a surface of the substrate intended to be a friction surface of the final brake disk once it has been completely manufactured. This process can be subsequently repeated with the opposite surface of the substrate. The coating layer aims at increasing the efficiency of the brake disk, such as increasing its resistance to wear and corrosion and its friction coefficient. The coating layer is applied using a laser cladding deposition process providing high power and high intake of material, in which powder is poured onto the surface to be coated, while a laser beam is radiated onto the surface to be coated from a laser head which is moved along the surface to be treated. The radiation of the laser beam focused on the surface generates a melt pool on the surface when powder is fed via, for example, a nozzle, in such a way that the powder melts. As the laser beam travels along the surface of the substrate, moving away from the deposited material, the deposited material cools down and solidifies on the surface of the substrate. By repeating this process all over the surface to be treated, a coating layer substantially covers the substrate. The covered surface can be a friction surface of a brake disk.

A first aspect of the disclosure relates to a method for manufacturing a brake disk, comprising:
providing a substrate of a brake disk, the substrate being made of a graphite-containing metallic material, the substrate defining a surface;
removing graphite from the surface of the substrate by applying a cleaning stage in which the surface is radiated with a laser beam emitting with a power comprised in the range of between about 2 and about 12 kW with a diameter of the laser spot comprised in the range of between about 1.5 and about 4 mm;
depositing a metal-based coating layer onto the surface of the substrate from which graphite has been removed by applying a laser cladding deposition process.

In the context of the present disclosure, a laser spot (or area thereof) is understood to mean a projection on the surface of the substrate of a radiated laser beam, covering an area thereof. A powder spot is understood to mean the powder as deposited or projected on the surface of the substrate as delivered for example from a powder nozzle, covering an area thereof.

The substrate is preferably made of grey cast iron.

The graphite contained in the substrate is typically lamellar graphite, which is present in, among other types of substrate, grey cast iron.

The at least one coating layer comprises metal. In the context of the present disclosure, the at least one coating layer is a metal-based coating layer. In some embodiments, the at least one coating layer is a single layer made of metal. Preferably, the metal-based coating layer is made of steel, such as stainless steel. In some embodiments, the at least one coating layer is a single layer made of a mix of a metal and a carbide. In some embodiments, the at least one coating layer is a multilayer comprising two coating layers. In some embodiments, the at least one coating layer is a multilayer comprising at least one coating layer made of metal and at least one coating layer made of a mix of a metal and a carbide. Alternatively, the at least one coating layer is a multilayer comprising at least two coating layers made of a mix of a metal and a carbide. The at least one coating layer made of metal of the multilayer is preferably made of steel, such as stainless steel. The metal in the at least one coating layer made of a mix of a metal and a carbide is preferably steel, such as stainless steel. In preferred embodiments, the carbide is tungsten carbide or titanium carbide. In some embodiments, the at least one coating layer made of metal comprises only pure metal.

In some embodiments, the at least one coating layer made of a mix of a metal and a carbide comprises from about 10 wt.% to about 30 wt.% of a carbide and from about 70 wt.% and 90 wt.% of a metal. In some embodiments, the at least one coating layer made of a mix of a metal and a carbide comprises from about 20 vol.% to about 40 vol.% of a carbide and from about 60 vol.% to about 80 vol.% of a metal.

In some embodiments, the at least one coating layer is a single layer having thickness from about 50 to about 250 µm. For example, the single layer may have a thickness of about 100 µm with a tolerance of ±40 µm or a thickness of about 200 µm with a tolerance of ±40 µm. In some embodiments, the at least one coating layer is a multilayer made of two layers, wherein the first layer may have thickness between 50 and 250 µm and the second layer may have thickness between 150 and 350 µm. For example, the first layer may have a thickness of about 100 µm with a tolerance of ±40 µm or a thickness of about 200 µm with a tolerance of ±40 µm. For example, the second layer may have a thickness of about 200 µm with a tolerance of ±20 µm or a thickness of about 300 µm with a tolerance of ±20 µm. The thickness of the one or more layers was determined by acquiring and evaluating scanning electron microscope (SEM) and/or optical microscope (OM) images.

The powder used to obtain the at least one coating layer may be metal-based powder, such as steel-based powder, or a mix of metal-based powder and carbide-based powder. Non-limiting examples of carbide-based powder are tungsten carbide powder and titanium carbide powder. The metal-based powder is conventional and is out of the scope of the present invention. For example, powder may be a particle composite made of steel. Or powder may be a particle composite made of carbide. When a coating layer made of a mix of a metal and a carbide is to be obtained, powder particles of metal and powder particles of carbide are combined and the mix of powder particles is poured onto the surface to be coated, in such a way that, when a laser beam is radiated onto the surface to be coated, the radiation of the laser beam focused on the surface generates a melt pool of material on the surface. The size of the powder particles may vary in the range from about 4 to about 180 µm (microns, 10⁻⁶ m) of diameter (assuming spherical particles, although they may also take other forms, including irregular, in which case the former values refer to the largest dimension of the particle). Preferably, the size of the powder particles may vary from about 10 to about 63 µm, more preferably from about 20 to about 53 µm. Powder particles are typically commercialized under specific fractions of diameter or main dimension, such as between 5-45 µm, or between 4-45 µm, or between 15-45 µm, or between 20-53 µm, or between 20-63 µm, or between 45-106 µm, or between 45-150 µm, or between 53-125 µm, or between 53-180 µm. The shape and average size distributions of the particles were determined by acquiring and evaluating scanning electron microscope (SEM) and/or optical microscope (OM) images. In embodiments in which the particles are substantially spherical, the average size refers to the average diameter of the particles. In a non-limiting example, the metal-based powder used is a commercial powder, such as AISI 316L (stainless steel; spherical powder particles having diameter in the range of 20-53 µm, provided by Höganäs); or such as AISI 430L (stainless steel; spherical or irregular powder particles having main dimension in the range of 20-53 µm, provided by Höganäs); or such as WC (tungsten carbide; spherical powder particles having diameter in the range of 20-53 µm, provided by C&M); or such as TiC (titanium carbide; irregular powder particles having main dimension in the range of 15-45 µm, provided by Höganäs or in the range of 45-150 µm, provided by Ampere or in the range of 20-63 µm, provided by Heeger). In some embodiments, the titanium carbide can contain ferrochrome.

In some embodiments, the stage of depositing a coating layer involves depositing one single layer, preferably of a mix of metal and a carbide, such as tungsten carbide or titanium carbide. This layer is obtained from powder comprising a mix of metal-based powder and carbide-based powder.

Prior to depositing a coating layer on a surface of the substrate, graphite is removed from the substrate, in particular, from the surface thereon on which the coating layer is going to be deposited, or more generally, from the surface of the substrate and from the portion of the substrate below said surface, in the vicinity thereof. In particular, graphite is removed from the most superficial portion of the substrate, typically from a superficial portion thereof having a maximum thickness of 80 µm, such as a maximum thickness of 50 µm or a maximum thickness of 30 µm. By removing graphite substantially only in this superficial portion, the substrate beneath this superficial portion is not damaged because its structure containing graphite is maintained. The graphite is usually in the form of lamellar graphite, which is typically present when the substrate is grey cast iron. Graphite is removed by radiating the surface with a laser beam under specific conditions. Together with the removal of graphite, lubricant remains and rust usually present on the surface of the substrate are also removed.

Both in the cleaning stage and in the laser cladding deposition stage, the amount of density of energy to be applied on the surface of the substrate depends on several parameters, such as the power of the laser beam, the area of the laser spot to be applied on the surface and the required cycle time (amount of time within which the cleaning process of the surface must be accomplished). The density of energy applied by a laser beam follows the equation: $d ensity of energy = \frac{Energy}{area of laser spot} = \frac{power x cycle time}{area of laser spot}$. In the cleaning stage, the density of energy must be applied in an amount that enables the removal of lamellar graphite from the surface of the substrate while substantially preserving the integrity of the substrate beneath the surface. In the laser cladding deposition stage, the density of energy must be applied in an amount that enables the thermal treatment of the surface on which powder is to be deposited and the melting of the powder to deposit a coating layer.

The power of the laser beam applied in the cleaning stage may vary in the range of between 2 and about 12 kiloWatt (kW), preferably between about 4 kW and about 8 kW both included, and more preferably between about 5 and about 7 kW both included.

A laser system providing a circular laser spot is used. Preferred values of area of laser spot are comprised in the range between about 1.75 and about 12.50 mm², which correspond to diameters of laser spot in the range between about 1.5 and about 4 mm. More preferred values of diameters of laser spot are between about 2 and about 4 mm, preferably between about 2.2 and about 3.7 mm, still more preferably between about 2.5 and about 3.5 mm. By selecting a suitable cycle time and power of the laser beam, graphite is correctly removed from the substrate.

The cycle time can be adjusted or selected taking into account several parameters, such as the size of the brake disk (surface to be cleaned) and the rotation velocity of the disk. The selected cycle time depends on the circumstances and specific application. A specific value of cycle time, or a maximum value of cycle time, is often imposed. For example, depending on the size of the brake disk to be treated, the cycle time may be required to be below 120 s (seconds), such as below 80 s, below 55 s (seconds), below 30 s or even below 20 s. Therefore, given a required cycle time, suitable values of the emitted power of the laser beam and diameter of the laser spot must be selected so that a brake disk having a friction surface with increased performance is obtained. In general, for a given area of laser spot, higher values of power of the laser beam enable to reduce the cycle time.

The cycle time can be imposed by production requirements. In this case, the cycle time is preferably as low as possible, so that a largest number of brake disks is manufactured per time unit (for example, working day). To optimize the production of accomplished brake disks, the cycle time of the stage of removing graphite from the surface of the substrate by applying a laser cleaning stage is preferably selected to be the same as the cycle time of the stage of applying a laser cladding deposition process to deposit a metal-based coating layer onto the surface of the substrate from which graphite has been previously removed. This enables to synchronize the operation of different production cells for the different production stages.

In some embodiments, the cycle time is selected to be comprised in the range of between 20 and 55 seconds. In this case, suitable values of applied power of laser beam and diameter of the laser spot must be selected so that graphite is correctly removed from the substrate.

In some embodiments, the laser beam provides a density of energy on the surface of the substrate in the range of between about 10 kJ/mm² and about 45 kJ/mm², preferably between of between about 14 kJ/mm² and about 40 kJ/mm².

After the cleaning stage, the amount of graphite in the surface of the substrate is thus reduced. The absence of graphite due to evaporation during the cleaning stage leaves holes on the surface, these holes causing an increase of the contact surface of the substrate intended to receive the deposited material to build a metal-based coating layer in a subsequent laser deposition stage. These holes usually take the form of elongated branches, implying a prominent increase in the contact surface. The larger the contact surface of the substrate is, the more amount of deposited material will firmly take root by filling the holes made on the surface of the substrate. In particular, it has been observed that the contact surface of the substrate is increased in more than about 20%, such as more than about 30% or more than about 50%. The inventors have observed that, when a metal-based coating layer is deposited onto the already cleaned substrate (i.e. the substrate having a reduced amount of graphite on its surface after radiating the surface with a laser beam as indicated above), that is to say, when a laser cleaning pretreatment is applied as a separate stage before the application of the laser cladding coating, the adherence of the coating layer(s) is increased (the coating layer is well integrated with the substrate), thus improving the resistance to wear and friction coefficient of the brake disk once manufactured. This is because holes left in the substrate (in the most superficial portion of the substrate) by the evaporation of graphite in the laser cleaning pretreatment are filled with the deposited coating material during the subsequent laser cladding process.

Besides, since the substrate previously treated with laser radiation has a reduced amount of lamellar graphite in its surface, the probability of evaporating graphite during the deposition process of a metal-based coating layer is reduced, and therefore it is less probable that undesired hollows and "bubbles" caused by abrupt graphite elimination (evaporation) are created during the deposition process. The contact surface between the substrate and the deposited coating layer is thus increased. It has also been observed that fine dust emissions typically emitted in use of the brake disk are also substantially reduced.

The laser system must radiate at a wavelength suitable to achieve graphite evaporation. Thus, the wavelength of the laser system used to radiate the surface of the substrate is preferably comprised in the range of between about 800 and about 1200 nanometer (nm, 10⁻⁹ m), such as between about 1000 and about 1150 nm, or between about 1030 and about 1100 nm. Other wavelengths also suitable to achieve graphite evaporation may be used alternatively. This applies both to the laser cleaning stage and to the laser cladding deposition stage.

The laser radiation is emitted from a laser processing head, which for example carries a nozzle. The emitted laser radiation passes through the nozzle, coaxially, along the longitudinal axis of the nozzle. For the laser beam to radiate onto the surface of the substrate in the cleaning stage, so that graphite is removed therefrom, the laser beam preferably travels defining any pattern (a line, a regular or irregular geometrical figure, or any other pattern) on the surface of the substrate to be exposed to the laser radiation. The laser system can be a pulsed laser or a continuous-wave laser, such as a scanned continuous-wave laser. Preferably, it is a continuous-wave laser. Typically, the selected pattern follows a linear trajectory along a radial axis of the surface of the substrate.

Preferably ,simultaneously, the substrate revolves (spins) around its axis of rotation with a certain angular velocity. When the laser beam moves following a linear trajectory, the linear advance of the laser beam along the linear trajectory (i.e. from a central point of the surface, which corresponds to the inner radius of the substrate forming the brake disk, and therefore lies in the axis of rotation of the substrate, to a point of the substrate surface corresponding to its outer radius, or vice versa), generates a spiral-shaped trajectory. In other words, the substrate of the brake disk rotates while the laser processing head moves linearly on the surface of the substrate (following a defined pattern), said linear movement following a radial trajectory on the surface of the substrate.

Thus, in some embodiments the substrate of the brake disk rotates while the laser processing head from which the laser beam is emitted moves linearly on the surface of the substrate, said linear movement following a radial trajectory on the surface of the substrate. For example, the substrate rotates at a variable angular velocity while the laser beam linearly moves radially. The angular velocity of the substrate is variable to compensate for the radial advance of the laser beam, in such a way that the substrate rotates at a constant linear velocity. For example, the substrate may rotate at a linear velocity comprised in the range of between 80 and 240 meters/minute (m/min), preferably between 120 and 200 m/min. The laser beam preferably moves linearly at a velocity lower than 500 mm/min. The velocity of the laser beam depends on the dimensions of the brake disk. This applies both to the laser cleaning stage and to the laser cladding deposition stage. In the laser cladding deposition stage, the velocity of the laser beam moving along the radius of the substrate can be adjusted to in turn adjust the distance between neighbour metal-based clads.

By applying the laser cleaning treatment to the surface of the substrate, the amount of lamellar graphite in the upper portion of the substrate (i.e. most superficial thickness thereof of about 80 µm) is remarkably reduced. In particular, it has been observed that between about 50 and about 100% of the graphite lamellae present in the surface, in particular within a thickness of about 30 µm from the surface, are evaporated due to the laser radiation.

So, when the disclosed laser cleaning treatment is applied on the surface of the substrate, evaporation of at least about 50% of the lamellar graphite present in the vicinity of the surface of the substrate is achieved, without substantially damaging the substrate (for example, compromising its homogeneity or altering its microstructure) beneath this uppermost portion of the substrate.

In the cleaning stage, preferred values of power of the laser beam are comprised in the range of between about 2 and about 12 kW, which have proven to perform correctly in cycle times comprised in the range of between about 20 and about 120 seconds, such as between about 20 and about 55 s, if suitable diameters of the laser spot are selected, such as diameters of laser spot comprised in the range of between about 1.5 and about 4 mm. Still more preferred values of power of the laser beam are in the range of between about 4 and about 8 kW, and still more preferred between about 5 and about 7 kW.

For example, if the power of the laser beam is fixed to 2 kW and the cycle time is fixed to be 30 s, by selecting a diameter of laser spot between about 1.5 and about 2.1 mm, evaporation of lamellar graphite from the surface of the substrate is achieved in the cleaning stage, without substantially damaging the substrate. In this case, the applied density of energy on the surface of the substrate is between about 17 and about 32 kJ/mm². Or, if the power of the laser beam is fixed to 2 kW and the cycle time is fixed to be 120 s, by selecting a diameter of laser spot between about 3.1 and about 4.0 mm, evaporation of lamellar graphite from the surface of the substrate is achieved, without substantially damaging the substrate. The applied density of energy is also between about 17 and about 32 kJ/mm².

For example, if the power of the laser beam is fixed to 3 kW and the cycle time is fixed to be 30 s, by selecting a diameter of laser spot between about 1.9 and about 2.55 mm, evaporation of lamellar graphite from the surface of the substrate is achieved, without substantially damaging the substrate. In this case, the applied density of energy on the surface of the substrate is between about 17 and about 32 kJ/mm². Or, if the power of the laser beam is fixed to 3 kW and the cycle time is fixed to be 90 s, by selecting a diameter of laser spot between about 3.2 and about 3.82 mm, evaporation of lamellar graphite from the surface of the substrate is achieved, without substantially damaging the substrate. In this case, the applied density of energy on the surface of the substrate is between about 20 and about 35 kJ/mm².

For example, if the power of the laser beam is fixed to 4 kW and the cycle time is fixed to be 30 s, by selecting a diameter of laser spot between about 2.2 and about 2.95 mm, evaporation of lamellar graphite from the surface of the substrate is achieved, without substantially damaging the substrate. In this case, the applied density of energy on the surface of the substrate is between about 17 and about 32 kJ/mm². Or, if the power of the laser beam is fixed to 4 kW and the cycle time is fixed to be 80 s, by selecting a diameter of laser spot between about 3.3 and about 4.00 mm, evaporation of lamellar graphite from the surface of the substrate is achieved, without substantially damaging the substrate. In this case, the applied density of energy on the surface of the substrate is between about 20 and about 37.5 kJ/mm².

For example, if the power of the laser beam is fixed to 5 kW and the cycle time is fixed to be 30 s, by selecting a diameter of laser spot between about 2.45 and about 3.3 mm, evaporation of lamellar graphite from the surface of the substrate is achieved, without substantially damaging the substrate. In this case, the applied density of energy on the surface of the substrate is between about 17 and about 32 kJ/mm². Or, if the power of the laser beam is fixed to 5 kW and the cycle time is fixed to be 70 s, by selecting a diameter of laser spot between about 3.4 and about 4.00 mm, evaporation of lamellar graphite from the surface of the substrate is achieved, without substantially damaging the substrate. In this case, the applied density of energy on the surface of the substrate is between about 27 and about 38 kJ/mm².

For example, if the power of the laser beam is fixed to 6 kW and the cycle time is fixed to be 30 s, by selecting a diameter of laser spot between about 2.7 and about 3.6 mm, evaporation of lamellar graphite from the surface of the substrate is achieved, without substantially damaging the substrate. In this case, the applied density of energy on the surface of the substrate is between about 17 and about 32 kJ/mm². Or, if the power of the laser beam is fixed to 6 kW and the cycle time is fixed to be 55 s, by selecting a diameter of laser spot between about 3.3 and about 4.00 mm, evaporation of lamellar graphite from the surface of the substrate is achieved, without substantially damaging the substrate. In this case, the applied density of energy on the surface of the substrate is between about 25 and about 38 kJ/mm².

For example, if the power of the laser beam is fixed to 7 kW and the cycle time is fixed to be 30 s, by selecting a diameter of laser spot between about 2.91 and about 3.9 mm, evaporation of lamellar graphite from the surface of the substrate is achieved, without substantially damaging the substrate. In this case, the applied density of energy on the surface of the substrate is between about 17 and about 32 kJ/mm². Or, if the power of the laser beam is fixed to 7 kW and the cycle time is fixed to be 51 s, by selecting a diameter of laser spot between about 3.5 and about 4.00 mm, evaporation of lamellar graphite from the surface of the substrate is achieved, without substantially damaging the substrate. In this case, the applied density of energy on the surface of the substrate is between about 27 and about 38 kJ/mm².

For example, if the power of the laser beam is fixed to 8 kW and the cycle time is fixed to be 30 s, by selecting a diameter of laser spot between about 3.11 and about 4.00 mm, evaporation of lamellar graphite from the surface of the substrate is achieved, without substantially damaging the substrate. In this case, the applied density of energy on the surface of the substrate is between about 19 and about 32 kJ/mm². Or, if the power of the laser beam is fixed to 8 kW and the cycle time is fixed to be 45 s, by selecting a diameter of laser spot between about 3.2 and about 4.00 mm, evaporation of lamellar graphite from the surface of the substrate is achieved, without substantially damaging the substrate. In this case, the applied density of energy on the surface of the substrate is between about 27 and about 44 kJ/mm².

For example, if the power of the laser beam is fixed to 12 kW and the cycle time is fixed to be 25 s, by selecting a diameter of laser spot between about 3.00 and about 4.00 mm, evaporation of lamellar graphite from the surface of the substrate is achieved, without substantially damaging the substrate. In this case, the applied density of energy on the surface of the substrate is between about 23 and about 42 kJ/mm². Or, if the power of the laser beam is fixed to 12 kW and the cycle time is fixed to be 30 s, by selecting a diameter of laser spot between about 3.2 and about 4.00 mm, evaporation of lamellar graphite from the surface of the substrate is achieved, without substantially damaging the substrate. In this case, the applied density of energy on the surface of the substrate is between about 28 and about 44 kJ/mm².

While values of power above 12 kW and up to about 24 kW may perform correctly in the cleaning stage considering a required cycle time, the inventors have observed that values of power above 12 kW, and in particular in the vicinity of 24 kW, cause the substrate (brake disk) to deform. For example, it has been observed that the surface of the substrate loses its flatness (becomes curved) towards its outer perimeter due to the high power applied to the surface of the brake disk even if the cycle time is short. For this reason, values of laser power above 12 kW are less preferred, such as above 13 kW or above 14 kW.

In turn, although the inventors have observed a reduction of graphite in the surface of the substrate when the cleaning stage is applied using values of power below 2 kW, such as between about 200 W and about 2 kW, in this case the performance of the cleaning process is relatively good only for relatively long cycle times (for example about 120 s) with respect to short ones (for example about 30 s) because longer cycle times imply longer interaction between the applied power and the surface under treatment, therefore increasing the probability of evaporation of graphite from the surface of the substrate.

Considering a typical brake disc, when the mentioned parameters are applied (a laser beam emitting with power comprised in the range of between about 2 and about 12 kW, diameter of laser spot comprised in the range of between about 1.5 and about 4 mm), the substrate revolving at a linear velocity comprised in the range of about 80 and about 240 m/minute and the laser beam linearly moving at a velocity lower than 500 mm/minute), a circular ring-shaped surface of a substrate having an inner diameter of between about 160 and about 230 mm and an outer diameter of between about 270 and about 410 mm, requires a pre-treatment for removing graphite (cleaning pre-treatment) having a duration comprised in the range of between about 20 seconds and about 55 seconds.

Referring now to the stage of depositing a metal-based coating layer onto the surface of the substrate from which graphite has been removed in the previous laser cleaning stage, this is done by applying a laser cladding deposition process, in which powder (metal-based powder or a mix of metal-based powder and carbide-based powder) is deposited onto the surface to be coated while a laser beam is radiated onto the surface to be coated, preferably while the substrate revolves. This process is preferably done with a continuous laser beam defining a linear trajectory. In the deposition process, it is chosen a laser beam having an area of the laser spot (as projected on the surface of the substrate) greater than the area of the powder spot (as deposited on the surface). Using an area of laser spot larger than the area of the powder spot enables to heat the area of the surface on which powder is going to be deposited, just prior to the powder being indeed deposited. This provides further cleaning of the surface, in addition to the already laser cleaning stage previously applied to the surface.

The powder is delivered from a powder nozzle coupled to the laser head from which the laser beam is radiated, so that the laser beam and the powder nozzle move together radially along the surface to be coated as the laser head moves. A laser system providing a circular laser spot is used. The diameter of the laser spot is chosen to be larger than the diameter of the powder spot, preferably between about 10 and about 40% larger. The inventors have observed that this additional laser heating, which in fact occurs just before the actual deposition of material, conditions or prepares the surface in a way that improves the adherence of the subsequently deposited powder because the laser beam applied in the laser deposition process causes the elimination of additional lamellar graphite, for example present deeper in the substrate with respect to the most superficial thickness thereof. For example, while within the uppermost 30 µm of thickness between about 50 and about 100% of the graphite has been evaporated in the first cleaning stage, the additional laser cleaning performed during the material deposition process causes the evaporation of graphite in a deeper region of the substrate, such as between about 30 and about 50 µm of depth. Without this additional laser heating/cleaning process performed just before the coating material is deposited, the graphite still present in the surface of the substrate can explode during the deposition of the material due to the high temperature reached by the molten pool and because the hollows or "bubbles" left open by the explosion of graphite cannot be filled in with deposited material due to the instantaneous cooling and solidification of the molten pool. This is prevented or at least reduced by the additional laser heating/cleaning process.

The diameter of the laser spot used in the laser cladding process can be in a range between about 1.5 and about 4 mm, preferably between about 2 and about 4 mm, more preferably between about 2.2 and about 3.7 mm, and still more preferably between about 2.5 and about 3.5 mm, and the diameter of the powder spot as being deposited on the substrate is smaller than the diameter of the laser spot and is preferably in a range between about 1 and about 3.5 mm, more preferably between about 1 and about 2.5 mm, and still more preferably between about 1 and about 2 mm, provided that the diameter of the laser spot is between about 10 and about 40% larger than the diameter of the powder spot.

Furthermore, unlike in conventional laser cladding deposition processes, in which the axis of the laser beam being emitted (and therefore the axis of the corresponding laser spot on the surface being treated) is aligned with the axis of the nozzle or deposit from which the powder is delivered, the inventors have surprisingly found that the cladding process is optimized when the laser spot reaches an area on the surface being treated a certain amount of time before the powder is deposited on that area of the surface in the form of metal-based clad. It is therefore desirable that the laser spot interacts with the substrate without material being yet deposited during a certain amount of interaction time. This interaction time requires certain misalignment between the axis of the laser beam (and therefore laser spot) and the axis of the powder spot. Therefore, the interaction time depends on the size of the laser spot and powder diameter, on the misalignment between axes and on the process velocity. Preferably, the interaction time is comprised in the range of between about 0.05 and about 5 ms. Therefore, the axis of the laser beam should not be aligned with respect to the axis of the nozzle delivering the powder. By decentering the axis of the powder spot with respect to the axis of the laser beam spot, during the linear movement of the laser beam while the substrate of the brake disk rotates, the laser spot reaches an area on the surface being treated in advance to the instant in which the powder is deposited on the surface in the form of metal-based clad. The decentering is such that the laser spot interacts with the substrate without material being yet deposited during the mentioned interaction time.

Therefore, due to the misalignment between axes (axis of the laser beam and therefore corresponding laser spot, on the one hand, and axis of the powder nozzle and therefore corresponding powder spot, on the other hand), some laser radiation applied on the surface by the laser beam reaches a zone of the surface of the substrate before powder delivered from the powder nozzle is deposited on that zone of the surface, in such a way that said some laser radiation interacts with said zone of the surface before powder is deposited on said zone, thermically preparing the surface to receive the powder and laser cleaning the surface. Besides, other laser radiation reaches the zone of the surface on which powder is being poured at the same time as said powder is deposited on the thermically prepared zone, thus enabling the melting of the deposited powder and the creation of a clad which integrates well with the thermically prepared surface of the substrate. By laser radiating the zone of the surface before powder is deposited on said zone, the zone is minimally altered due to the evaporation of graphite present in the uppermost thickness of the substrate, thus improving the contact surface on which material (deposited powder) will be received. This laser radiation also causes the evaporation of additional dirt, such as lubricant remains and rust, for example caused by a previous machining process, thus preventing the loss of quality of the deposited metal-based coating layer.

In the laser cladding deposition process of a first metal-based coating, the surface is radiated with a laser beam emitting with a power preferably comprised in the range of between about 6 and about 16 kW with a diameter of the laser spot preferably comprised in the range of between about 1.5 and about 4 mm during a suitably selected cycle time. As indicated, to optimize the production of accomplished brake disks, the cycle time of the laser cleaning stage is preferably selected to be the same as the cycle time of the stage to deposit a metal-based coating layer onto the surface of the substrate from which graphite has been previously removed. Preferred values of power of the laser beam are comprised in the range of between about 7 kW and about 12 kW both included, more preferably between about 7.5 kW and about 10 kW both included, which have proven to perform correctly if suitable areas of the laser spot are selected within the mentioned diameters of laser spot. As mentioned, preferred values of diameter of the laser spot are comprised in the range of between about 2 and about 4 mm, more preferably between about 2.2 and about 3.7 mm, and still more preferably between about 2.5 and about 3.5 mm.

In some embodiments of the laser cladding deposition process, the cycle time is selected to be comprised in the range of between about 20 and about 55 seconds. In this case, suitable values of applied power of laser beam and diameter of the laser spot must be selected.

In some embodiments of the laser cladding deposition process to deposit a first coating layer, the laser beam provides a density of energy on the surface of the substrate in the range of between about 14 kJ/mm² and about 50 kJ/mm².

As mentioned, the axis of the powder spot is preferably misaligned with respect to the axis of the laser spot in an amount between 0 (not including 0) and about 20% of the diameter of the laser spot, preferably between about 2.5 and about 15% thereof, more preferably between about 5 and about 12.5% thereof. Thus, for example, when the difference between the diameter of the laser spot and the diameter of the powder spot is between about 0.3 and about 0.5 mm, the interaction time can be selected to be between about 0.05 and about 0.7ms, depending on the disk size and velocity.

By laser radiating the area on which the powder will be immediately afterwards deposited, the surface is thermally affected at the moment when the coating material is received. In other words, decentering the axis of the laser beam with respect to the axis of the powder spot provides thermal contribution to the substrate. Thus, the inventors have surprisingly observed that, in contrast with the simultaneous delivery of laser radiation and powder, which causes an undesired displacement of the deposited material on the surface of the substrate due to the stress suffered by the material just deposited on the substrate, hindering the integration and adherence of the material with the substrate, the igneous powder particles reaching the surface with the mentioned misalignment (and therefore, delay) can more easily fuse with the thermally affected surface of the substrate, increasing their adherence to the substrate. By misaligning the axis, the laser radiation is applied a bit in advance with respect to the application of powder material and the high concentration of laser energy is firstly only applied on the surface of the substrate, which becomes a bit thermally affected, which contributes to the subsequent integration of the igneous poured material and the substrate. Besides, by thermally affecting the surface of the substrate prior to applying the powder, the evaporation of additional lamellar graphite still present in the most superficial thickness of the substrate or present deeper in the substrate with respect to the most superficial thickness thereof (for example present in a region of the substrate of between 30 and 50 µm of depth) prior to the actual delivery and melting of powder, is enhanced. This causes that the coating material is received on a surface which has additional holes left by the evaporation of graphite and which has already been heated a little bit in advance. In sum, decentering the axis of the powder spot with respect to the axis of the laser beam spot, contributes to the integration of the metal deposition with the substrate and to increase the removal of graphite without causing bubbles which damage the substrate, and to the adherence of the metal-based coating on the substrate.

Decentralizing the axis of the powder nozzle with respect to the axis of the laser beam can be achieved either by maintaining the powder nozzle (and therefore its cone) fixed and moving the laser head accordingly, or the other way round, that is to say, maintaining the laser head in its original position and moving the powder nozzle.

After repeating this process all over (along and across) the surface of the substrate, a metal-based coating layer or clad substantially covers the substrate. The covered surface can be a friction surface of a brake disk.

In embodiments, during the cleaning stage and/or during the laser cladding deposition stage, a shielding gas is emitted onto the surface of the substrate. The shielding gas is for example emitted through a gas nozzle. The gas nozzle can be provided on the same laser processing head as the laser processing head carrying the nozzle through which the laser radiation is emitted. The shielding gas can be, for example, Nitrogen or Argon. During the laser deposition stage, the shielding gas is preferably emitted onto the surface of the substrate where the laser beam is being applied but the powder has not yet been deposited. The inventors have observed that the application of a shielding gas contributes to preventing the oxidation of the surface being treated after the cleaning (or laser deposition) treatment and contributes to the homogenization of the surface, for example by hiding or reducing the trace or track of the laser passes because the overlap between neighbor passes can be reduced. Without the shielding gas, the gas emitted during the evaporation of graphite tends to oxide the surface of the substrate. Besides, without shielding gas more time is required to homogenize the surface (i.e. reduce the trace of laser passes) because a larger overlap between neighbour passes is required.

Preferably, the distance between the surface of the substrate and the proximal end of the nozzle from which the powder is to be delivered towards the surface, and the distance between the surface of the substrate and the focal distance of the laser beam, are selected so that a previously defined size (i.e. width or diameter) of the clad (deposited coating) is obtained. This previously defined size is usually smaller than the size (i.e. diameter) of the powder nozzle from which powder is delivered. After a certain cycle time, a complete metal-based coating layer is deposited on the substrate.

In embodiments, the stage of depositing a coating layer involves depositing one single layer, preferably of a mix of metal and a carbide, preferably, tungsten carbide or titanium carbide. This layer is obtained from powder comprising a mix of metal powder and carbide powder.

As mentioned, to deposit a coating layer on the surface of the substrate, the surface is radiated with a laser beam emitting with a power comprised in the range of between about 6 and about 16 kW with a diameter of the laser spot comprised in the range of between about 1.5 and about 4 mm during a suitably selected cycle time.

For example, if the power of the laser beam is fixed to 6 kW and the cycle time is fixed to be 30 s, by selecting a diameter of laser spot between about 2.4 and about 3.3 mm, a suitable layer of metal-based coating is achieved. In this case, the applied density of energy on the surface of the substrate is between about 21 and about 40 kJ/mm². Or, if the power of the laser beam is fixed to 6 kW and the cycle time is fixed to be 50 s, by selecting a diameter of laser spot between about 3 and about 4 mm, a suitable layer of metal-based coating is achieved. In this case, the applied density of energy on the surface of the substrate is between about 21 and about 42 kJ/mm². Or, if the power of the laser beam is fixed to 6 kW and the cycle time is fixed to be 70 s, by selecting a diameter of laser spot between about 3.5 and about 4 mm, a suitable layer of metal-based coating is achieved. In this case, the applied density of energy on the surface of the substrate is between about 32 and about 44 kJ/mm². At this power, large diameters of laser spot, such as between about 3.5 and about 4 mm are less preferred because they require diameters of powder spot (which should be only a bit smaller than the diameter of the laser spot) relatively large, for which the applied power may not be enough to melt the powder completely even in long cycle times. Therefore, for an applied laser power of 6 kW, smaller areas of laser spot and therefore shorter cycle times are preferred.

For example, if the power of the laser beam is fixed to 7 kW and the cycle time is fixed to be 30 s, by selecting a diameter of laser spot between about 2.5 and about 3.3 mm, a suitable layer of metal-based coating is achieved. In this case, the applied density of energy on the surface of the substrate is between about 21 and about 42 kJ/mm². Or, if the power of the laser beam is fixed to 7 kW and the cycle time is fixed to be 50 s, by selecting a diameter of laser spot between about 3.2 and about 4 mm, a suitable layer of metal-based coating is achieved. In this case, the applied density of energy on the surface of the substrate is between about 27 and about 42 kJ/mm². Or, if the power of the laser beam is fixed to 7 kW and the cycle time is fixed to be 70 s, by selecting a diameter of laser spot between about 3.8 and about 4 mm, a suitable layer of metal-based coating is achieved. In this case, the applied density of energy on the surface of the substrate is between about 38 and about 43 kJ/mm². However, for the same reason as the one given for power of 6 kW, small areas of laser spot and therefore short cycle times are preferred.

For example, if the power of the laser beam is fixed to 8 kW and the cycle time is fixed to be 30 s, by selecting a diameter of laser spot between about 2.7 and about 3.7 mm, a suitable layer of metal-based coating is achieved. In this case, the applied density of energy on the surface of the substrate is between about 22 and about 42 kJ/mm². Or, if the power of the laser beam is fixed to 8 kW and the cycle time is fixed to be 50 s, by selecting a diameter of laser spot between about 3.3 and about 4 mm, a suitable layer of metal-based coating is achieved. In this case, the applied density of energy on the surface of the substrate is between about 30 and about 46 kJ/mm².

For example, if the power of the laser beam is fixed to 9 kW and the cycle time is fixed to be 30 s, by selecting a diameter of laser spot between about 2.7 and about 3.7 mm, a suitable layer of metal-based coating is achieved. In this case, the applied density of energy on the surface of the substrate is between about 25 and about 47 kJ/mm². Or, if the power of the laser beam is fixed to 9 kW and the cycle time is fixed to be 50 s, by selecting a diameter of laser spot between about 3.5 and about 4 mm, a suitable layer of metal-based coating is achieved. In this case, the applied density of energy on the surface of the substrate is between about 35 and about 46 kJ/mm².

For example, if the power of the laser beam is fixed to 12 kW and the cycle time is fixed to be 30 s, by selecting a diameter of laser spot between about 3.2 and about 4 mm, a suitable layer of metal-based coating is achieved. In this case, the applied density of energy on the surface of the substrate is between about 28 and about 45 kJ/mm². Or, if the power of the laser beam is fixed to 12 kW and the cycle time is fixed to be 19 s, by selecting a diameter of laser spot between about 2.6 and about 3.5 mm, a suitable layer of metal-based coating is achieved. In this case, the applied density of energy on the surface of the substrate is between about 23 and about 43 kJ/mm².

In embodiments, the stage of depositing a coating layer involves depositing a first coating layer made of metal and a second coating layer onto the first coating layer made of a mix of metal and a carbide, preferably, tungsten carbide or titanium carbide. When two metallic coating layers are deposited, the stage of cleaning (pretreatment) the surface by radiating the surface with a laser beam (with no powder deposition) is only done before the application of the first coating layer (and not before the application of the second coating layer). Like in the laser deposition process to apply the first coating layer on the substrate, the second coating layer is applied using a laser beam having an area of the laser spot (as projected on the surface of the substrate) greater than the area of the powder spot (as deposited on the surface), in similar relationship between diameters of laser spot and powder, and in which the axis of the powder spot is decentered with respect to the axis of the laser beam spot. The process of depositing the second coating layer is therefore substantially the same as the process of depositing the first coating layer, including type and size of powder material, except for the selection of certain operation parameters.

To deposit a second coating layer onto a first coating layer already deposited, the surface is radiated with a laser beam emitting with a power comprised in the range of between about 7 and about 18 kW with a diameter of the laser spot comprised in the range of between about 1.5 and about 4 mm during a suitably selected cycle time. Preferred values of power of the laser beam are comprised in the range of between about 7.5 kW and about 14 kW both included, more preferred between about 7.5 and about 12 kW both included, which have proven to perform correctly if suitable diameters of laser spot and cycle times are selected. In particular, the selected cycle time is preferably in the range of between about 20 and about 55 seconds. Because the second coating layer has typically a thickness larger than the thickness of the first coating layer, it normally requires higher power and/or longer cycle time to melt the required powder.

In some embodiments of the second laser cladding deposition process to obtain a second coating layer, the laser beam provides a density of energy on the surface of the substrate in the range of between about 25 kJ/mm² and about 70 kJ/mm².

For example, if the power of the laser beam is fixed to 7 kW and the cycle time is fixed to be 30 s, by selecting a diameter of laser spot between about 2.2 and about 3.0 mm, a suitable second layer of metal-based coating is achieved. In this case, the applied density of energy on the surface of the substrate is between about 29 and about 54 kJ/mm². Or, if the power of the laser beam is fixed to 7 kW and the cycle time is fixed to be 50 s, by selecting a diameter of laser spot between about 2.7 and about 3.5 mm, a suitable layer of metal-based coating is achieved. In this case, the applied density of energy on the surface of the substrate is between about 36 and about 60 kJ/mm². Small diameters of laser spot are preferred because the diameter of the powder spot is only a bit smaller than that of the laser spot, and large powder particles require higher power to be melted.

For example, if the power of the laser beam is fixed to 8 kW and the cycle time is fixed to be 30 s, by selecting a diameter of laser spot between about 2.2 and about 3.0 mm, a suitable layer of metal-based coating is achieved. In this case, the applied density of energy on the surface of the substrate is between about 33 and about 63 kJ/mm². Or, if the power of the laser beam is fixed to 7 kW and the cycle time is fixed to be 50 s, by selecting a diameter of laser spot between about 2.7 and about 3.3 mm, a suitable layer of metal-based coating is achieved. In this case, the applied density of energy on the surface of the substrate is between about 46 and about 70 kJ/mm². Small diameters of laser spot are preferred because the diameter of the powder spot is only a bit smaller than that of the laser spot, and large powder particles require higher power to be melted.

For example, if the power of the laser beam is fixed to 9 kW and the cycle time is fixed to be 30 s, by selecting a diameter of laser spot between about 2.3 and about 2.9 mm, a suitable layer of metal-based coating is achieved. In this case, the applied density of energy on the surface of the substrate is between about 40 and about 65 kJ/mm². Or, if the power of the laser beam is fixed to 9 kW and the cycle time is fixed to be 50 s, by selecting a diameter of laser spot between about 3 and about 4 mm, a suitable layer of metal-based coating is achieved. In this case, the applied density of energy on the surface of the substrate is between about 35 and about 63 kJ/mm².

For example, if the power of the laser beam is fixed to 12 kW and the cycle time is fixed to be 30 s, by selecting a diameter of laser spot between about 2.7 and about 4 mm, a suitable layer of metal-based coating is achieved. In this case, the applied density of energy on the surface of the substrate is between about 28 and about 63 kJ/mm². Or, if the power of the laser beam is fixed to 12 kW and the cycle time is fixed to be 40 s, by selecting a diameter of laser spot between about 3.1 and about 4 mm, a suitable layer of metal-based coating is achieved. In this case, the applied density of energy on the surface of the substrate is between about 38 and about 63 kJ/mm².

In sum, thanks to the surface being thermally treated just before the powder spot is deposited, due to the difference in laser spot and powder spot diameters and also due to the misalignment between the axis of the powder cone and the axis of the laser beam, the laser heat applied to the surface thermally prepares the surface and additionally cleans it, preparing the surface to receive the material by removing additional graphite lamellae and therefore opening new empty spaces to be filled with metal-based powder (which quickly melts on the surface), but without creating undesirable bubbles in the surface of the substrate which would be formed if the material was deposited exactly at the same time as the laser heats the surface. Consequently, the deposited coating clad is flat, homogeneous and well integrated with the substrate.

The laser cladding deposition process can use the same laser system as the laser system used in the cleaning stage, or a different one.

A second aspect of the disclosure relates to a brake disk manufactured following the manufacturing method of the first aspect of the invention.

A third aspect of the disclosure relates to a brake disk manufacturing device, comprising:
a laser system for cleaning, configured for removing graphite from a surface of a substrate for manufacturing a brake disk, the substrate being made of a graphite-containing metallic material, by applying a cleaning stage in which the surface is radiated with a laser beam emitting with a power comprised in the range of between 2 and 12 kW with a diameter of the laser spot comprised in the range of between 1.5 and 4 mm; and
a laser system for cladding deposition, configured for depositing a metal-based coating layer onto the surface of the substrate from which graphite has been removed by applying a laser cladding deposition.

In some embodiments, the laser system for cleaning and the laser system for cladding deposition comprise a commonly used laser head or distinct laser heads.

In some embodiments, the brake disk manufacturing device further comprises a rotating device, configured for rotating the substrate of the brake disk during the application of the cleaning stage and/or during the deposition of a metal-based coating layer, while the laser head(s) from which the laser beam is emitted move(s) linearly on the surface of the substrate, said linear movement following a radial trajectory on the surface of the substrate.

In some embodiments, the rotating device is configured such that the brake disk rotates at a linear velocity comprised in the range of 80 and 240 m/minute, more preferably in the range of 120 and 200 m/minute.

In some embodiments, the brake disk manufacturing device further comprises a shielding gas supply, configured such that during the application of the cleaning stage and/or during the deposition of a metal-based coating layer, a shielding gas is emitted onto the surface of the substrate while the surface is radiated with the laser beam, wherein the shielding gas is Nitrogen or Argon.

In some embodiments, the laser system for cleaning is configured such that in the cleaning stage the surface is radiated with a laser beam emitted with a power comprised in the range of between 4 and 8 kW, more preferably between 5 and 7 kW.

In some embodiments, the laser system for cleaning is configured such that in the cleaning stage the diameter of the laser spot used to remove graphite is in a range between 2 and 4 mm, preferably between 2.2 and 3.7 mm and more preferably between 2.5 and 3.5 mm.

In some embodiments, the laser system for cleaning is configured such that in the cleaning stage the laser beam provides a density of energy on the surface of the substrate in the range of between 10 and 45 kJ/mm².

In some embodiments, the laser system for cladding deposition comprises a powder supply and is configured such that, for depositing a metal-based coating layer onto the surface of the substrate from which graphite has been previously removed, powder is deposited using a laser beam with a diameter of the laser spot larger than the diameter of the powder spot to be applied to the surface, wherein the diameter of the laser spot is preferably between 10 and 40% larger than the diameter of the powder spot.

In some embodiments, the diameter of the laser spot in the laser cladding is in a range between 1.5 and 4 mm, preferably between 2 and 4 mm, more preferably between 2.2 and 3.7 mm, and still more preferably between 2.5 and 3.5 mm; and the diameter of the powder spot is in a range between 1 and 3.5 mm, preferably between 1 and 2.5 mm, and more preferably between 1 and 2 mm.

In some embodiments, in the laser cladding deposition for depositing a metal-based coating layer, the axis of the laser beam and therefore of the laser spot is misaligned with respect of the axis of the powder spot, preferably the axis of the powder spot is misaligned with respect to the axis of the laser spot in an amount between 0 and 20% of the diameter of the laser spot, more preferably between 2.5 and 15% thereof, even more preferably between 5 and 12.5 thereof.

In some embodiments, the laser system for cladding deposition is configured for operation in the laser cladding deposition for depositing a metal-based coating layer, such that the power of the laser beam is in a range between 6 kW and 16 kW, preferably between 7 kW and 12 kW, and more preferably between 7.5 and 10kW; while the laser system for cladding deposition is configured for operation at a cycle time selected to be between 20 and 55 seconds.

In some embodiments, the laser system for cladding deposition is configured for operation in the laser cladding deposition for depositing a metal-based coating layer, such that the diameter of the laser spot is comprised in the range of between 1.5 and 4 mm, preferably between 2 and 4 mm, more preferably between 2.2 and 3.7 mm and still more preferably between 2.5 and 3.5 mm.

In some embodiments, the laser system for cladding deposition is configured for operation in the laser cladding deposition for depositing a metal-based coating layer, such that in the laser cladding deposition for depositing a metal-based coating layer, a density of energy on the surface of the substrate in the range of between 14 kJ/mm² and 50 kJ/mm² is applied.

A fourth aspect of the disclosure relates to a use of the brake disk manufacturing device of the third aspect of the disclosure for providing a brake disk, wherein in the laser cladding deposition provides for one single layer being deposited, the one single layer being preferably made of a mix of a metal and a carbide, wherein the metal is preferably steel and the carbide is preferably tungsten carbide or titanium carbide.

A fifth aspect of the disclosure relates to a use of the brake disk manufacturing device of the third aspect of the disclosure for providing a brake disk, providing a first metal-based coating layer by laser cladding deposition further comprising providing a second laser cladding deposition, such that the second metal-based coating layer is deposited onto the first metal-based coating layer.

In some embodiments of the fifth aspect, the laser system for cladding deposition is configured for operation in the laser cladding deposition for depositing the second metal-based coating layer, such that the power of the laser beam is in a range between 7 and 18 kW, preferably between 7.5 and 14 kW, and more preferably between 7.5 and 12kW; and the cycle time is selected to be between 20 and 55 seconds.

In some embodiments of the fifth aspect, the laser system for cladding deposition is configured for operation in the laser cladding deposition for depositing the second metal-based coating layer, such that a density of energy on the surface of the substrate is in the range of between 25 and 70 kJ/mm².

In some embodiments of the fifth aspect, the laser system for cladding deposition is configured for operation in the laser cladding deposition such that in the first laser cladding deposition a layer made of metal, preferably steel, is applied; and in the second laser cladding deposition a layer made of a mix of a metal and a carbide, wherein the metal is preferably steel and the carbide is preferably tungsten carbide or titanium carbide, is applied.

A sixth aspect of the disclosure relates to a brake disk manufactured with the brake disk manufacturing device of the third aspect and/or under the use of any one of the fourth and fifth aspects, preferably the substrate is made of grey cast iron.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1A shows a photograph of a conventional brake disk prior to applying any treatment thereon. Figures 1B and 1C show photographs of the brake disk after applying a laser-based cleaning treatment according to this disclosure. Figures 1D and 1E show photographs of a brake disk like the one in Figure 1A, after applying a laser-based cleaning treatment according to this disclosure. Figure 1F shows a photograph of a brake disk like the one in Figure 1A after applying a laser-based cleaning treatment according to this disclosure.
Figures 2A and 2B schematically show a cleaning treatment applied to a surface of a substrate of a brake disk according to embodiments of the disclosure.
Figures 3A and 3B schematically show how the laser beam can be applied to the surface of the substrate under treatments according to embodiments of the disclosure.

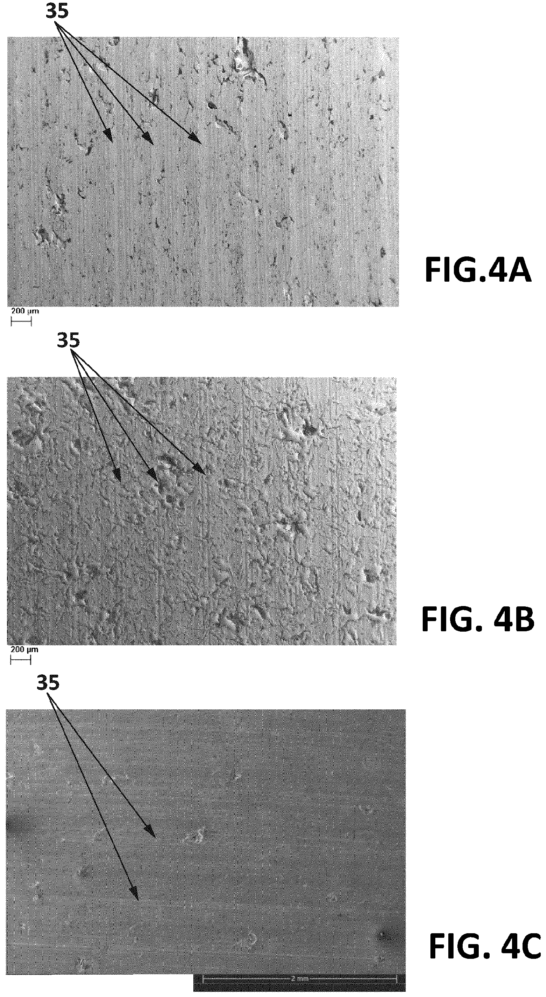

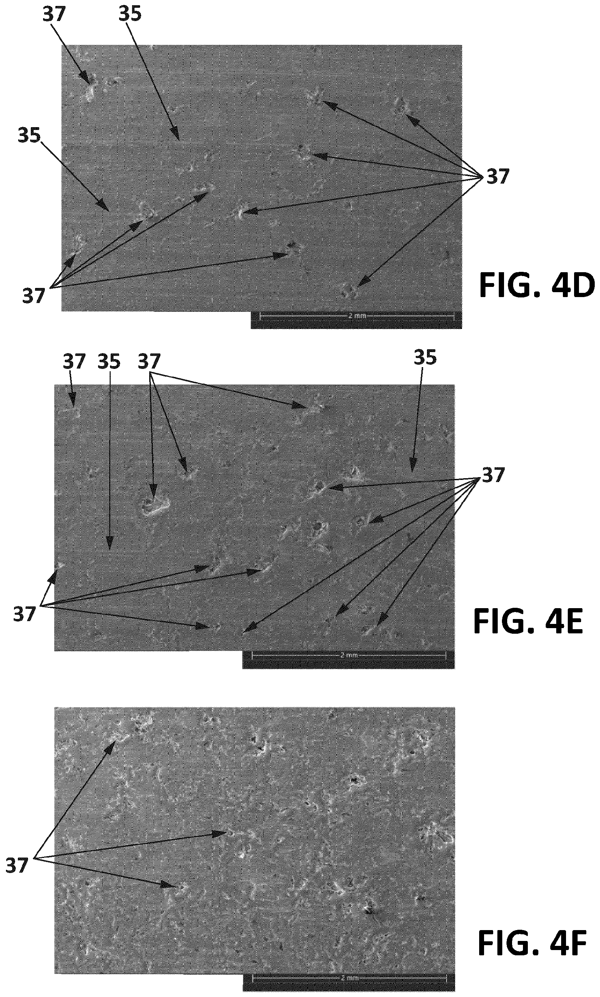

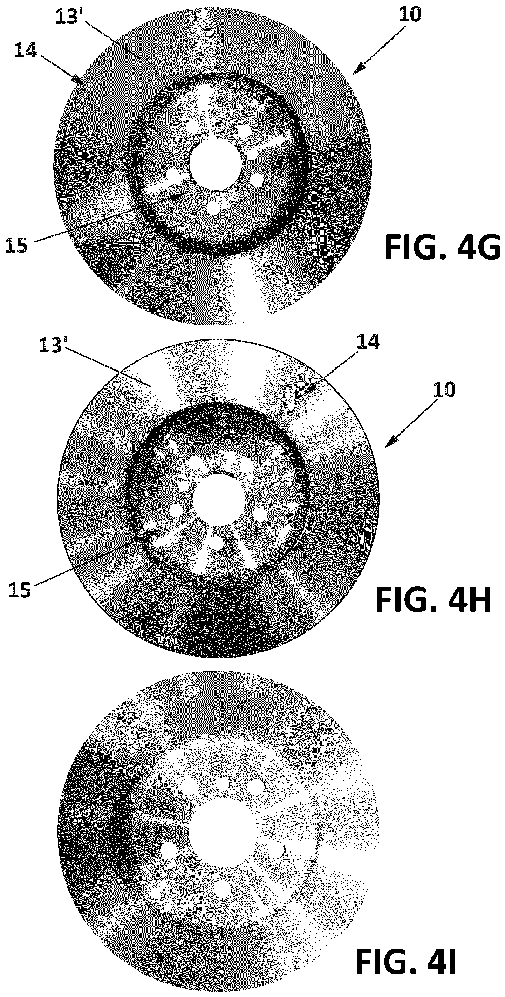

Figure 4A shows a SEM image of the surface of a substrate of a brake disk (the one shown in Figure 4G) without laser cleaning. Figure 4B shows a SEM image of the surface of the substrate after applying a laser cleaning process according to embodiments of the disclosure. Figure 4C shows another SEM image of the surface of the substrate without laser cleaning. Figures 4D-4F show SEM images of the surface of the substrate to which different laser cleaning processes have been applied. Figure 4G shows a photograph of the brake disk to which the shown surface belongs, prior to applying any treatment thereon. Figures 4H and 4I show the brake disk after a laser cleaning process has been applied.
Figures 5A and 5B show SEM images of the surface of the substrate of Figure 1A after being treated with the laser cleaning process according to embodiments of the disclosure.
Figures 6A, 6B and 6C show cross sections of the substrate of Figure 1A after being treated with the laser cleaning process according to embodiments of the disclosure.
Figure 7 schematically shows a section of a laser cladding system that can be used in a laser cladding deposition process according to embodiments of the disclosure.
Figures 8A and 8B schematically show a laser cladding deposition process applied to the previously cleaned surface of a substrate, according to embodiments of the disclosure.
Figures 9A and 9B show a photograph of a brake disk after applying a laser treatment and laser cladding deposition process according to embodiments of the disclosure.
Figures 10A and 10B show a manufactured brake disk following the disclosed processes of laser treatment and laser cladding deposition to deposit two coating layers according to embodiments of the disclosure.
Figure 11 schematically shows the shape of a metallic clad formed on the substrate while metal-based powder is being deposited in a laser cladding deposition process according to embodiments of the disclosure.
Figures 12A-12D show cross sections of a brake disk after being completely manufactured following the disclosed processes of laser treatment and laser cladding deposition according to embodiments of the invention. Figures 12A and 12C are SEM images. Figures 12B and 12D are optical microscopy (OM) images.
Figures 13A to 13D show OM images of brake disks to which a single coating layer has been applied following the disclosed laser cladding process.
Figures 14A to 14D show OM images of brake disks to which a single coating layer has been applied without misaligning the axis of the laser spot and the axis of the powder spot.
Figure 15 shows an OM image of a brake disk to which two coating layers have been applied without misaligning the axis of the laser spot and the axis of the powder spot.
Figures 16A and 16B show OM images of a brake disk to which a single coating layer has been applied following the disclosed laser cladding process.
Figure 17 shows an OM image of a coating layer applied to a brake disk according to embodiments of this disclosure.
Figures 18A-18B show a cross-sectional view of a clad of AISI 316L applied on the surface of a substrate of a brake disk to which no precleaning process nor decentering of axes in the laser cladding process have been applied.
Figure 19 shows a cross-sectional view a substrate to which two coating layers have been applied following embodiments of this disclosure.
Figure 20 shows a cross-sectional view a substrate to which two coating layers have been applied following embodiments of this disclosure.
Figure 21 shows a cross-sectional view a substrate to which two coating layers have been applied following embodiments of this disclosure.

### DESCRIPTION OF A WAY OF CARRYING OUT THE INVENTION

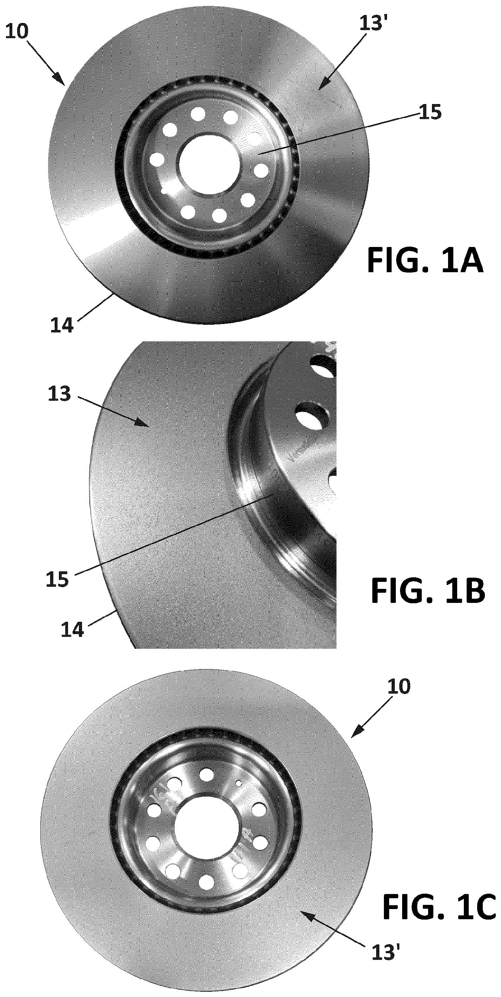

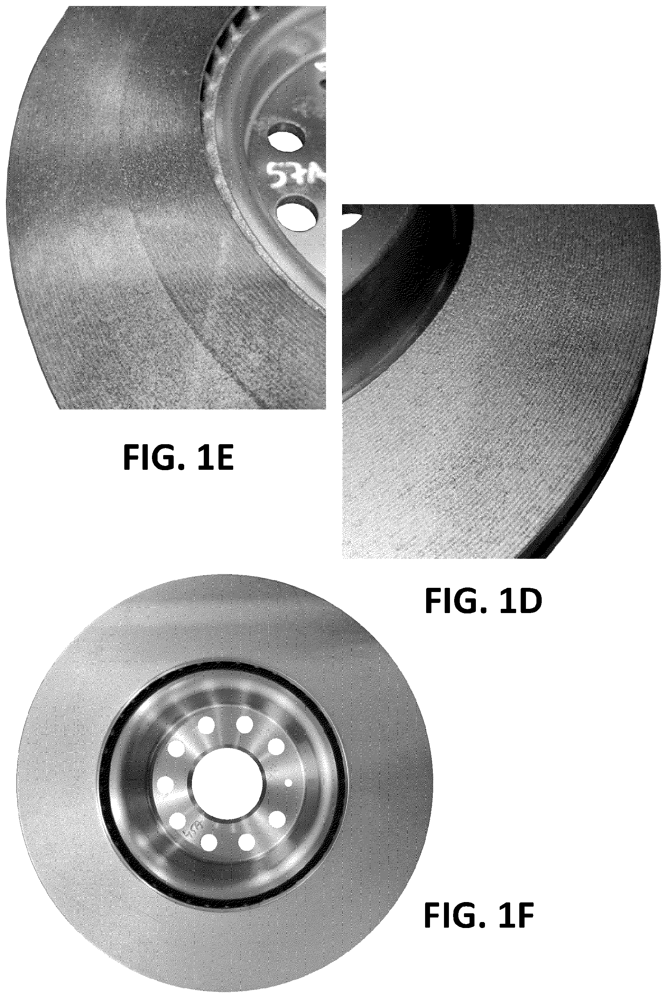

Figures 1A and 4G show photographs of conventional brake disks 10 prior to applying any treatment thereon (no laser cleaning treatment has been yet applied to the substrate, nor laser cladding deposition layer(s)). The brake disks are made of a substrate of a metallic material, which in the shown embodiment is grey cast iron. The disks are wheel-shaped and have an inner disk portion 15 and an outer disk portion 14 surrounding (external to) the inner disk portion 15. Both portions 14, 15 have cylindrical shape, the inner one 15 being thicker than the outer one 14. For this reason, the inner portion 15 can be referred to as a "hat", because of its shape resembling the crown of a hat, while the outer disk portion 14 resembles the brim of a hat. The outer disk portion 14 defines a ring having an inner radius and an outer radius. The outer disk portion 14 has two outer friction circular ring-shaped surfaces opposing each other. The inner diameter of the outer disk portion 14 of the disk shown in Figure 1A is 177 mm and its outer diameter is 306 mm. The inner diameter of the outer disk portion 14 of the disk shown in Figure 4G is 220 mm and its outer diameter is 350 mm. In the top view of Figures 1A and 4G only one friction surface 13' is visible. Figures 1B and 1C show photographs of the brake disk 10 of Figure 1A after a laser cleaning treatment for removing graphite according to this disclosure has been applied to an outer friction surface 13' (Figure 1C) and to the opposite outer friction surface 13 (Figure 1B). Figure 4H shows a photograph of the brake disk 10 of Figure 4G after a laser cleaning treatment according to this disclosure has been applied to an outer friction surface 13' of the disk. Figures 1D and 1E show detailed photographs of the brake disk of Figure 1A after applying a laser-based cleaning treatment according to this disclosure.

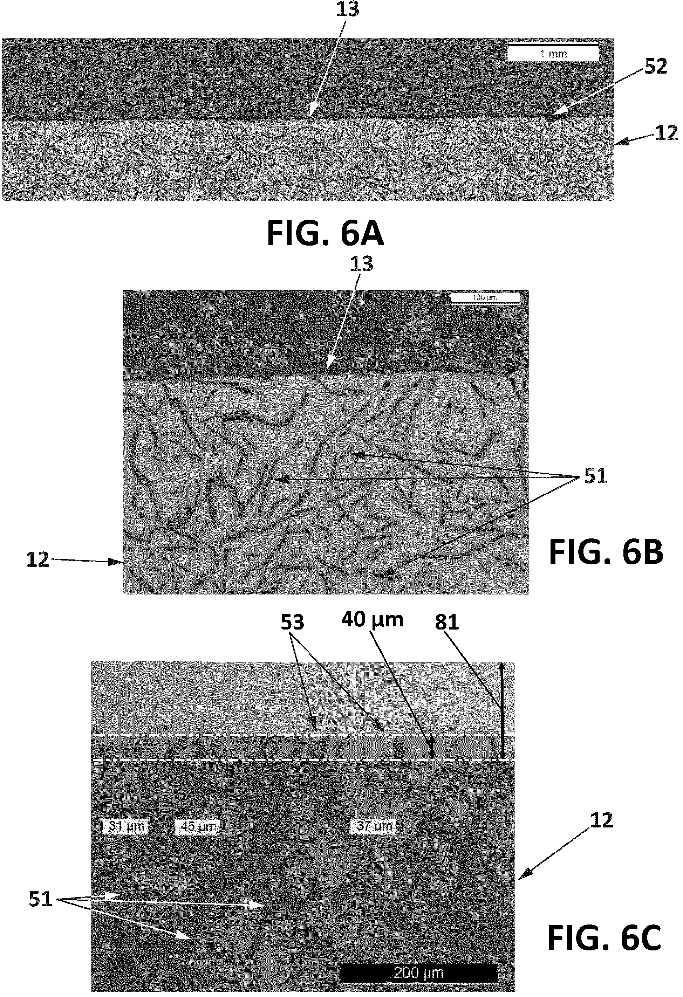

During a braking operation, these surfaces are pressed against a brake pad so that the brake disk is braked. The shown brake disk 10, and in particular its outer portion 14, is made of grey cast iron. From now on, reference sign 12 is used to refer to the substrate of the outer portion 14, which is the portion which needs to be treated by laser, although the inner portion (hat portion) 15 of the brake disk may be made of the same material (grey cast iron in the shown example). Substrate 12 contains graphite, in particular lamellar graphite, as shown for example in Figures 6A and 6B (dark lamellae 51 in Figure 6B), disclosed in detail later.

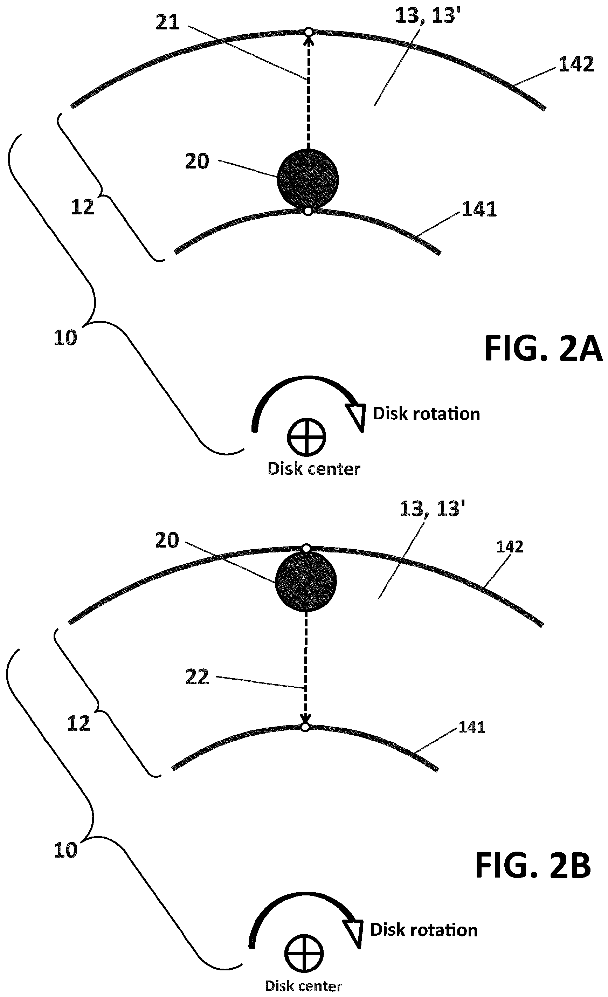

Figures 2A and 2B schematically show a laser cleaning treatment applied to a surface of the substrate 12. The surface can be any of the two surfaces 13, 13' of the outer disk portion 14.

In Figures 2A and 2B only a radial portion of the disk 10 (and therefore a radial portion of the substrate 12 defining a friction surface 13, 13') is shown. The shown portion includes the disk center (identified with a cross surrounded by a circle) and the inner 141 and outer 142 radius of the substrate 12 whose surface 13, 13' is to be treated. The surface 13, 13' is cleaned by applying a laser treatment on the surface 13, 13'. Laser radiation is emitted from a laser processing head, not shown, which for example carries a nozzle through which the laser radiation is emitted.

The surface 13, 13' is radiated with a laser beam defining a laser spot 20 on the surface of the substrate. In an embodiment, the movement of the laser beam and therefore of the laser spot 20 on the surface 13, 13' is illustrated with a straight dotted arrow in Figures 2A and 2B. Figure 2A shows the start of a cleaning process in a particular embodiment. In this case, the point from which the laser beam starts moving is a point on the inner radius 141 of the substrate 12. The laser beam could similarly start moving at a point on the outer radius 142 of the substrate 12, as shown in Figure 2B. In any case, simultaneously to the movement of the laser beam, the substrate 12 revolves around its axis of rotation with a certain angular velocity. The curved arrow surrounding the disk center in Figures 2A and 2B represents the rotation of the disk (substrate 12). In preferred embodiments, the linear velocity of the laser beam is constant and the angular velocity (RPM) of the disk is configured to vary depending on the radial position of the laser beam and therefore laser spot 20 on the surface under treatment, in such a way that the actual linear velocity of the disk is constant and the interaction between the laser beam on the substrate is also constant. The simultaneous linear advance of the laser beam (laser spot 20) along the linear trajectory shown with a dotted line 21 (from a point on the inner radius 141 of the substrate 12 to a point on the outer radius 142 of the substrate 12, or vice versa) and the rotation of the substrate 12 generates a spiral-shaped laser radiation trajectory on the substrate 12.

Once the laser beam and therefore laser spot 20 has radially moved from the inner radius 141 of the substrate 12 to the outer radius 142 thereof, or vice versa, either a return trajectory is followed by the laser spot 20 while the substrate 12 revolves, or the laser equipment is taken to its original position (for example, the starting position on the inner radius 141) and a one-way movement of the laser beam is started again while the substrate 12 revolves. This linear movement (either back-and-forth or one-way) of the laser beam while the substrate 12 rotates is repeated for a predetermined period of time, until the amount of the graphite present on the surface 13 of the substrate 12 has been reduced.

The surface 13, 13' is radiated with a laser beam providing a power comprised in the range of between about 2 and about 12 kW with a diameter of the laser spot comprised in the range of between about 1.5 and about 4 mm. By adjusting the cycle time, a density of energy on the surface of the substrate comprised in the range of between about 14 kJ/mm² and about 45 kJ/mm² is applied. For example, a laser system providing a power of 8 kW following a "top hat" laser energy distribution, a wavelength of 1064 nm and a laser spot of 2.7 mm can be used. A "top hat" energy distribution provides a substantially constant power along the whole surface of the produced laser spot. The emitted power is a parameter that can be regulated by the user, so that the applied laser power can be fixed as required, in this example, 8kW, without exceeding the maximum power provided by the laser system. The inventors have found out that a laser having a "top hat" energy distribution performs efficiently because it guarantees a homogeneous power distribution on the whole laser spot. It therefore homogeneously heats the surface on which the laser beam is irradiated. The inventors have observed that such homogeneous power distribution contributes to the efficiency of the cleaning process. Alternatively, a laser having a ring-shaped (donut-type) energy distribution can be used, for example a laser having a certain maximum power on an outer ring (also called outer corona) of the laser spot and a certain different power, lower than the maximum one, on the core of the laser spot.

The laser beam is moved or scanned defining a certain pattern on the surface 13, 13' to be exposed to the laser radiation. For example, the laser beam can be repetitively scanned following a scanning pattern, thereby creating an effective spot which is displaced in relation to the surface being treated. Alternatively, the laser beam can be moved (scanned) defining a certain trajectory. For example, in Figures 2A and 2B the laser beam is scanned defining a linear trajectory along a radial axis of the surface 13, 13' under laser treatment. The laser system emitting the laser beam is conventional and is out of the present invention. It typically comprises a laser equipment including a laser head for producing a laser beam and a positioning system, such as a scanner. A scanner typically includes two mirrors or similar for two-dimensional scanning of the laser beam in a horizontal plane. The movement of the laser head, suitably controlled, enables the laser beam to radiate on the chosen target, defining a laser spot thereon. As shown in Figures 2A-2B, the laser spot is circular.

Considering typical diameters of conventional brake disks, the substrate 12 preferably rotates at a linear velocity comprised in the range of about 80 and about 240 m/minute. The velocity of the laser beam depends on the disk dimensions and is therefore adjusted accordingly.

Lamellar graphite is thus removed from the surface 13, 13' of the substrate 12. In particular, lamellar graphite is reduced on the surface of the substrate and within a maximum depth of about 80 µm. Under these conditions, a typical substrate of a brake disk having inner diameter of between about 160 and about 230 mm and an outer diameter of between about 270 and about 410 mm requires a cleaning treatment for removing graphite having a duration comprised in the range of about 20 seconds and about 55 seconds. It has been observed that this cleaning treatment enables the evaporation of between 50 and 100% of the graphite lamellae present in the surface, in particular within a thickness of 30 µm from the surface.

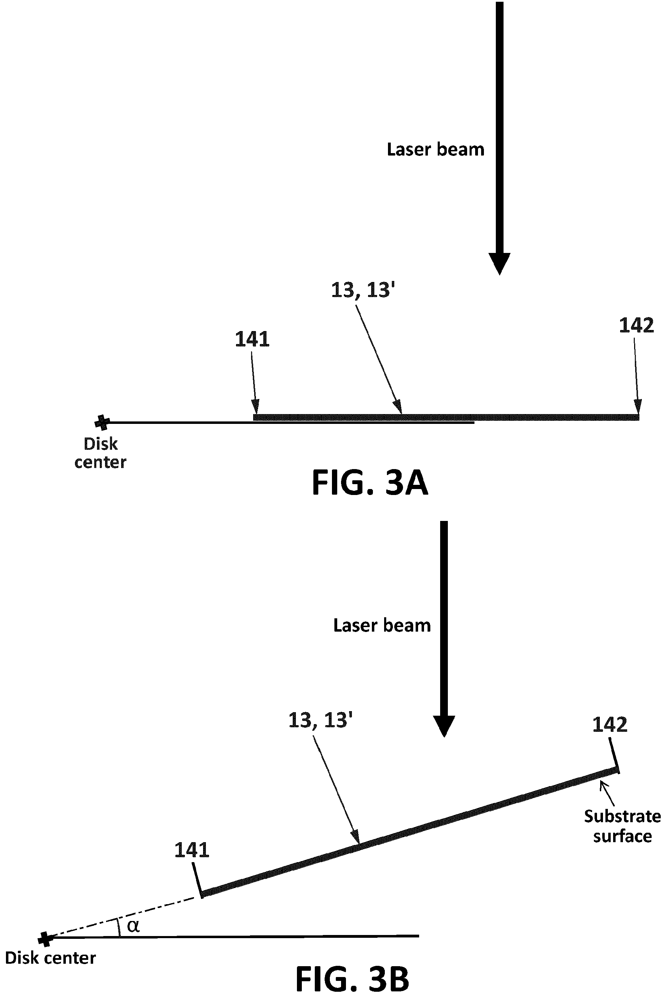

The laser beam can be applied either perpendicularly to the surface under treatment, as schematically shown in Figure 3A, or with a certain inclination or tilt angle α as shown in Figure 3B. The tilt angle α is defined as the angle formed by the plane on which the surface 13, 13' to be treated lies and a plane perpendicular to the laser beam, as shown in Figure 3B. Figures 3A and 3B only represent in schematic form a section of the surface 13, 13' being treated, delimited by its inner 141 and outer radius 142. Preferably, the tilting angle α is comprised in the range of between 0 and about 30 degrees, 0° corresponding to the laser beam being perpendicular to the surface under treatment (Figure 3A, disk not tilted). In Figure 3B, the tilting angle α is > 0°, meaning that the disk is tilted with respect to the laser beam. The tilting of the substrate with respect to the axis of the laser beam does not affect the laser treatment nor the removal of graphite. The substrate is tilted with respect to the laser beam if it is necessary depending on the circumstances, for example to prevent the laser head (which can optionally carry a nozzle for transporting a protection or shielding gas to be delivered to the brake surface) from colliding with the substrate 12 of with the disk hat 15 and/or to prevent laser beam reflections from traveling back to the laser head. These laser beam reflections could damage the optical elements which are in the optical path of the laser beam.

Although not shown, during operation of the laser system to apply a laser beam onto the surface of the substrate to remove graphite thereof, a shielding gas can be emitted onto the surface 13, 13' of the substrate 12. The shielding gas is for example emitted through a gas nozzle, which preferably travels simultaneously with the laser head. For example, the laser head and the gas nozzle can be firmly fixed to each other, so that they travel together following the same trajectory. The shielding gas can be, for example, Nitrogen or Argon. For example, an amount of gas in the range of about 10 to about 25 liters per minute is applied. The inventors have observed that the application of a shielding gas contributes to preventing the oxidation of the surface being treated after the cleaning treatment and contributes to the quick homogenization of the surface, in sum improving the cleaning.

Figures 1A-1C correspond to a first experiment. The surfaces 13 and 13' of the brake disk after applying a laser treatment to remove graphite are shown in Figures 1B and 1C, respectively. In particular, these photographs correspond to a brake disk made of grey cast iron, inner diameter of the disk of 177 mm, outer diameter of the disk of 306 mm, to which a laser treatment has been applied using the following operation parameters using a continuous laser: applied laser radiation power of 6 kW (top hat distribution), wavelength of 1064 nm, circular laser spot, diameter of laser spot of 2.7 mm, cycle time = 30 s, linear speed of the laser beam in the range of 100-200 mm/minute (to keep constant the linear rotating velocity of the disk), equivalent linear speed of the rotating substrate of 170 m/minute, applied density of energy = 31438 J/mm² and use of Nitrogen (N₂) as shielding gas. If the treated surfaces 13, 13' of respective Figures 1B and 1C are compared with the non-treated surface 13' (substrate before laser cleaning treatment) of Figure 1A, it can macroscopically be observed that, after the laser cleaning process, the appearance of the surface 13, 13' is matt, while the appearance of the surface of the substrate without any treatment is much brighter. This means that the surface of the break disk has been affected by the laser treatment in the sense that the laser cleaning stage causes a significant reduction of superficial graphite, which is evaporated. As a consequence of the evaporation (removal) of graphite of the surface of the substrate, a better contact surface is achieved for the subsequent bonding between the treated substrate (with reduced amount of graphite) and a metal-based coating layer to be applied on the treated substrate of the break disk.

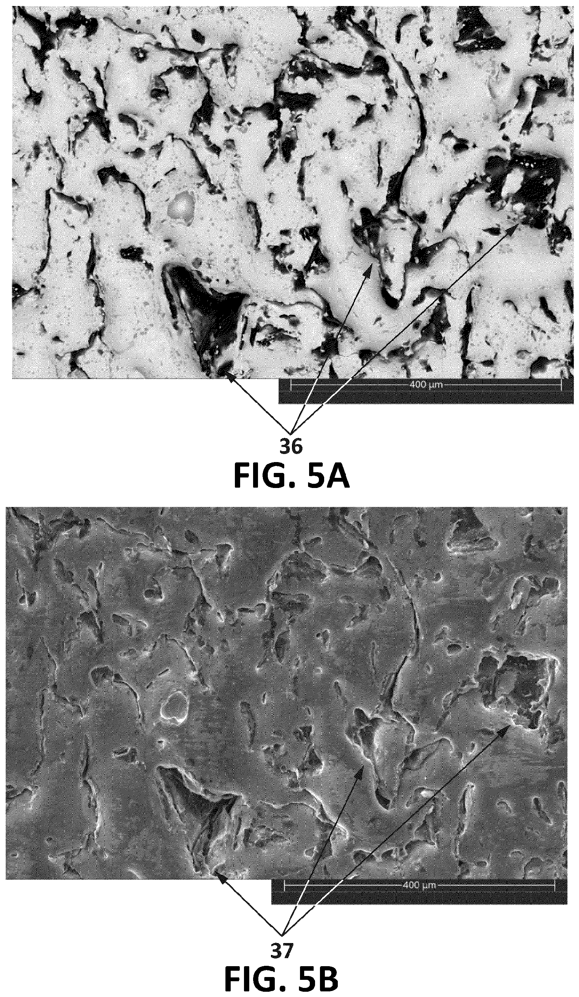

Figures 5A and 5B show SEM (Scanning Electron Microscopy) images (magnification x500) of the surface 13' of the substrate 12 of Figure 1C after being treated with the laser cleaning process of this disclosure. The images have been taken with different adjustments of a SEM device. In both images the empty spaces left after graphite lamellae have been pulled out (evaporated) can be clearly appreciated. Figure 5A has been taken with a configuration of a SEM device which highlights different materials. In particular, the lighter portions of the image represent the substrate (cast iron), while darker portions of the image represent traces of graphite 36 on the surface. Figure 5B has been taken with a configuration of a SEM device which permits to identify the surface relief (certain depth is appreciated). In particular, the shown empty spaces 37 on the surface are caused by the missing graphite lamellae from the surface. This means that the substrate surface, which should be substantially flat, now presents a certain depth (holes) left by the graphite evaporation. These holes cause an increase of the contact surface of the substrate intended to receive the deposited material in a subsequent laser stage.

Still referring to the first experiment (Figures 1A-1C and 5A-B), Figures 6A and 6B show microscope images of a cross section of the substrate of the disk after being treated with the disclosed laser cleaning process. Images 6A and 6B differ in the image resolution, which is lowest in Figure 6A and larger in Figure 6B. The lower portion of each image (the light grey portion thereof) represents the substrate 12, in which graphite lamellae 51 are present (in dark grey colour). It is noted that it is desirable not to alter the structure of the substrate (except in its most superficial portion, where it is desirable to evaporate graphite) and therefore to maintain the graphite inherently present in the substrate. The elongated shape of the graphite can be appreciated, forming branches. In Figures 6A and 6B holes 52 can be observed, in particular on the surface of the substrate, corresponding to graphite lamellae which have been evaporated during the laser cleaning process. This holes 52 will enable the deposition and integration with the substrate of a metal-based coating layer to be subsequently deposited. Figure 6C shows a microscope image of a cross section of the same substrate 12 in which, after the laser cleaning treatment, a metal-based coating layer has been deposited following a deposition process disclosed next. The image resolution of Figure 6C is twice the resolution of Figure 6B. It can be observed that the holes 52 left on the surface and proximity thereof, left by the elimination of graphite, have been filled 53 with the coating layer 81. Thanks to the increase of the contact surface of the substrate caused by the typically branched holes left open by the evaporation of graphite lamellae, there is a corresponding increase in the amount of deposited material which fills the holes and takes root, increasing the adherence between the coating layer and the substrate. The minimally affected thickness of the substrate surface below the deposited coating layer is estimated to be about 40 µm in Figure 6C. In other words, a homogeneous heat affected zone (HAZ) is guaranteed to not exceed a thickness of about 40 µm.

The positive effect of the application of a shielding gas can be observed in a second experiment shown in Figures 1D and 1E. They show a brake disk like the one shown in Figures 1A-1C, to which a cleaning process has been applied as follows: applied laser power = 2000 W, cycle time = 30 s, circular laser spot, diameter of laser spot = 1.55 mm and applied density of energy = 31797.87 J/mm². The disk of Figure 1E has not been treated with shielding gas. In contrast, the disk of Figure 1D has been applied with N₂. As can be observed, the shielding gas prevents oxidation of the surface of the substrate.

A third experiment has been made with the disk of Figure 4G. Figure 4G shows a photograph of a brake disk made of grey cast iron, inner diameter of the disk of 220 mm and outer diameter of the disk of 350 mm, to which no laser cleaning process has been applied. Figures 4A and 4C show SEM images (magnification x30 and x100, respectively) of the non-treated surface of the substrate (surface 13' of the disk shown in Figure 4G). It has clear machining marks, which is evidence that no laser cleaning process has been applied. To remove graphite from the surface of the disk, the following laser treatment has been applied using a continuous laser: applied laser power = 5000 W, cycle time = 30 s, linear rotating velocity of disk = 170 m/min, circular laser spot, wavelength = 1064 nm, diameter of laser spot = 3.3 mm and applied density of energy = 17535.73 J/mm². The surfaces 13 and 13' of the brake disk after applying a laser treatment to remove graphite are shown in Figures 4H and 4I. Figures 4B and 4E show SEM image (magnification x30 and x100, respectively) of the surface of the substrate after the exemplified laser cleaning process. In Figure 4E many holes left open by evaporated graphite lamellae can be observed (empty spaces 37). Some machining marks 35 are also observed. In the non-treated surface of Figure 4A machining marks 35 are very clearly appreciated, which proves that the disk has not been exposed to any laser treatment. In this case, there is graphite (i.e. graphite lamellae) on the surface and/or close to the surface of the substrate. In Figure 4B machining marks 35 are much less clearly appreciated, which is an indication that the disk has been exposed to a laser treatment. In this case, after the laser treatment, in which some of the graphite lamellae have been detached or evaporated from the substrate, there are empty spaces caused by the missing graphite lamellae. The inventors have observed that these empty spaces (void areas or void zones) on the surface of the substrate or in the proximity of the surface of the substrate increase the effective surface on which a coating layer can be deposited, thus contributing to the adhesion of the subsequent coating layer to be deposited. In other words, a metal-based coating will fill the empty spaces left by the missing graphite.

A fourth and a fifth experiments have been made with a brake disk like the one shown in Figure 4G.

In the fourth experiment, the following laser treatment has been applied using a continuous laser: applied laser power = 3000 W, cycle time = 30 s, linear rotating velocity of disk = 170 m/min, circular laser spot, wavelength = 1064 nm, diameter of laser spot = 3.3 mm and applied density of energy = 10500 J/mm². Figure 4D shows a SEM image (magnification x100) of one of the treated surfaces of the disk. In this figure only a few holes left open by evaporated graphite lamellae can be observed (empty spaces 37). Machining marks 35 are clearly seen.

In the fifth experiment, the following laser treatment has been applied using a continuous laser: applied laser power = 7000 W, cycle time = 30 s, linear rotating velocity of disk = 170 m/min, circular laser spot, wavelength = 1064 nm, diameter of laser spot = 3.3 mm and applied density of energy = 24552.83 J/mm². Figure 4F shows a SEM image (magnification x100) of one of the treated surfaces of the disk. In this figure many holes left open by evaporated graphite lamellae can be observed (empty spaces 37). Besides, machining marks 35 are barely observed.

If the SEM images of Figures 4D, 4E and 4F are compared, an optimal performance of the laser cleaning stage of Figure 4F (applied power of 7 kW) is appreciated, in which many holes left open by evaporated graphite lamellae can be observed. Besides, machining marks are barely observed. In contrast, the laser cleaning stage of Figure 4D (applied power of 3 kW) performs poorly and only a few holes left open by evaporated graphite lamellae can be observed. Machining marks are clearly seen.

Once the amount of graphite in the surface of the substrate of the brake disk has been reduced, one or more coating layers are applied on the surface to obtain a manufactured brake disk, that is to say, a brake disk having increased resistance to wear and corrosion and/or increased friction coefficient with respect to the resistance to wear and corrosion and/or friction coefficient of a non-coated brake disk. The brake disk may be coated with one or more coating layers, such as one or two coating layers, or even more than two coating layers, depending on different factors, such as the expected performance of the manufactured brake disk. The coated surface shall be a friction surface of a brake disk.

The at least one coating layer is applied using a laser cladding deposition process, in which metal-based powder is deposited onto the surface 13, 13' previously cleaned, while a laser beam is radiated onto the surface 13, 13' to be coated from a laser head which is moved along the surface to be treated while the disk rotates. The laser cladding deposition process can use the same laser system as the laser system used in the cleaning stage, or a different one. In the laser cladding deposition process, the powder is delivered from a powder nozzle coupled to the laser head from which the laser beam is radiated, so that the laser beam and the powder nozzle move together radially along the surface to be coated as the laser head moves. Usually, a carrier gas is used to drag or pull the powder towards the surface under treatment.

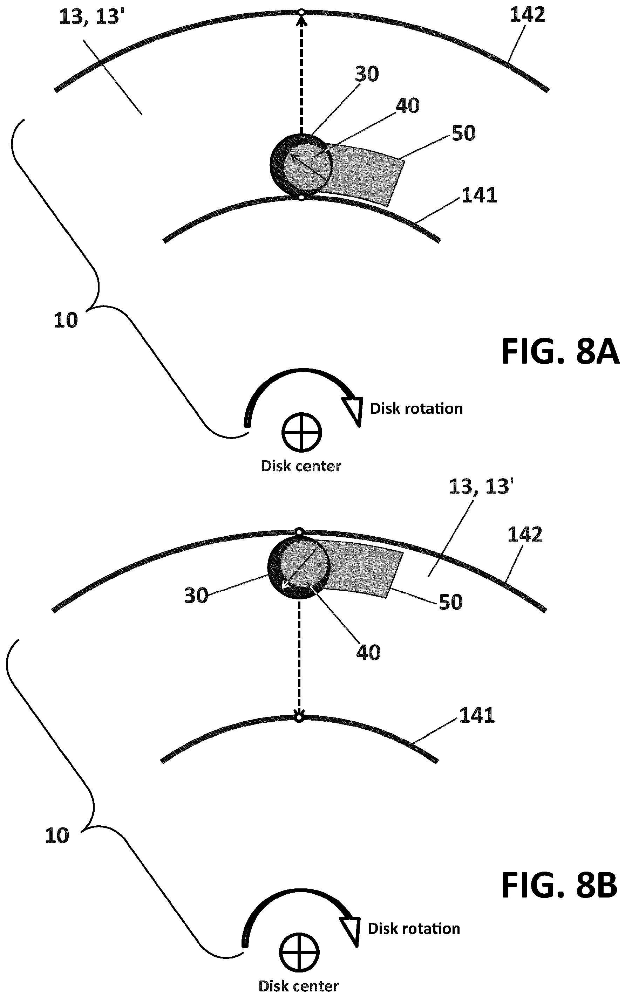

To deposit a coating layer on the surface 13, 13', a laser beam head performs a radial movement along the radius of the substrate while the substate 12 rotates in a similar way as described with reference to Figures 2A and 2B. However, because in this case powder is being delivered onto the surface 13, 13' in the form of powder spots 40 with the aim of depositing a coating layer, each area of surface 13, 13' to be covered preferably receives a single pass of powder. That is to say, to obtain a coating layer, powder is preferably not stacked, or at least the overlapping of material should be minimized. Thus, the movement followed by the laser head and the relative velocities of the laser head and disk are configured so that a substantially homogeneous coating layer finally covers the surface. In other words, by delivering the powder as described, a kind of metal-based cord or clad is deposited on the substrate and additional cords or clads are deposited adjacent each other, without substantial overlapping of cords, or at least with reduced overlapping, so that a substantially flat coating layer is achieved on the surface 13, 13' of the substrate 12. A sketch of the metal-based cord or clad 50 being deposited on the surface is shown in Figures 8A and 8B.

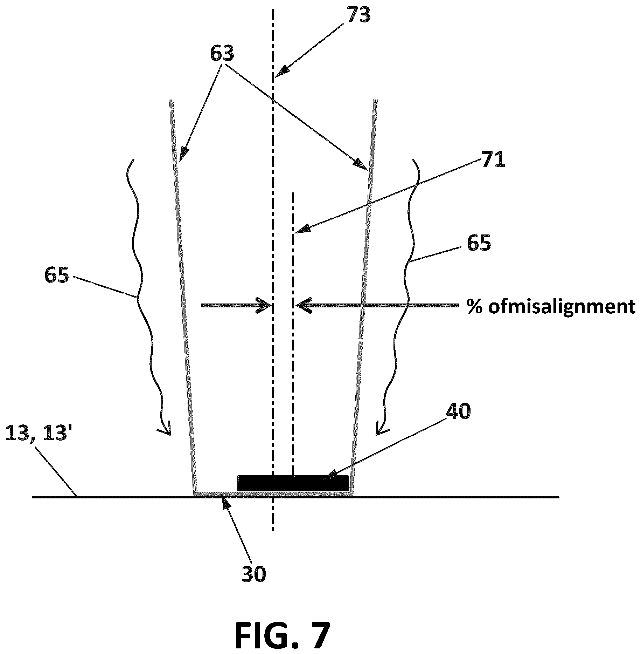

Figure 7 schematically shows a longitudinal section of a laser system that can be used in the laser cladding deposition process to deposit one or more coating layers onto the surface 13, 13' previously cleaned. The laser head (not shown) emitting the laser beam 63 and the nozzle (not shown) carrying the powder to be delivered travel together. Typically, the laser beam 63 is confined within a nozzle (not shown), within the open space delimited (surrounded) by the nozzle, in such a way that a laser spot 30 is projected on the surface 13, 13' under treatment. The laser spot is circular. The powder is in turn delivered from a nozzle onto the surface 13, 13' under treatment, forming a powder spot or clad 40 thereon. The laser head can be the same one as, or a different one from the laser head used to radiate a laser beam in the previously described laser cleaning process. During operation of the laser system to perform the laser cladding deposition process, a shielding gas 65 can be emitted onto the surface of the substrate, for example through a gas nozzle which travels simultaneously with the laser head. The gas nozzle can be the same one as the powder nozzle, or there can be two different nozzles which are preferably fixed to each other, so that they travel together. The shielding gas can be, for example, Nitrogen or Argon. The area of the laser spot 30 is selected to be greater than the area of the powder spot 40. Preferably, it is chosen a laser system emitting a laser beam 63 having a diameter of the laser spot 30 (as projected on the surface 13, 13' of the substrate 12) between about 10% and about 40% greater than the diameter of the powder spot 40 deposited onto the surface 13, 13'. Besides, the axis 71 of the powder spot 40 is misaligned (de-centered) with respect to the axis 73 of the laser spot 30 in an amount of between 0 and about 20% of the diameter of the laser spot, preferably between about 2.5 and about 15% thereof, more preferably between about 5 and about 12.5% thereof. In several experiments, the diameter of the laser spot 30 is about 20% larger than the diameter of the powder spot 40 and the axis 71 of the powder spot 40 is misaligned with respect to the axis 73 of the laser spot 30 in an amount of at least about 10 % of the diameter of the laser spot 30.

Like in the cleaning process previously applied (Figures 2A and 2B), the laser beam 63 describes a radial movement between a point on the inner radius 141 of the substrate 12 and a corresponding point on the outer radius 142 thereof, or vice versa, while the substrate 12 rotates, until a complete coating layer is deposited on the cleaned surface 13, 13'. Figures 8A and 8B schematically show examples of a laser cladding deposition process applied to the previously cleaned surface 13, 13' of the substrate 12. Like in Figures 2A and 2B, in Figures 8A and 8B only a radial portion of the substantially cleaned surface 13, 13' of the substrate 12 is schematically shown.

Figures 8A and 8B illustrate an embodiment of the laser cladding deposition process applied to deposit a coating layer to coat the substrate 13, 13'. The energy distribution of the laser beam is a top hat distribution. The laser head and powder nozzle radially move together either from the inner 141 radius to the outer one 142 of the substrate 12 whose surface 13, 13' is being treated or from the outer 142 radius to the inner radius thereof. The diameter of the powder spot 40 is smaller than the diameter of the laser spot 30. The axis 73 of the laser beam 63 is not aligned with respect to the axis 71 of the nozzle delivering powder 61. Therefore, due to the simultaneous linear movement of the laser beam and rotation of the substrate 12, the laser spot 30 reaches an area on the surface 13 being treated still more in advance than the deposit of the powder (metallic spot) 40 on the surface. In Figures 8A and 8B the dotted straight arrow represents the linear trajectory followed by the laser beam and powder nozzle. Reference sign 50 represents a schematic sketch of the clad of powder spot (i.e. forming a kind of cord) formed on the surface 13 of the substrate 12 while the laser beam, powder nozzle and substrate move. This sketched cord of powder 50 is approximate and does not exactly represent an actual trace formed by the powder clad taking into account the linear advance of the laser head and nozzle and the rotation of the substrate. This process is done for a predetermined period of time, until a complete coating layer has been deposited on the substrate 13.

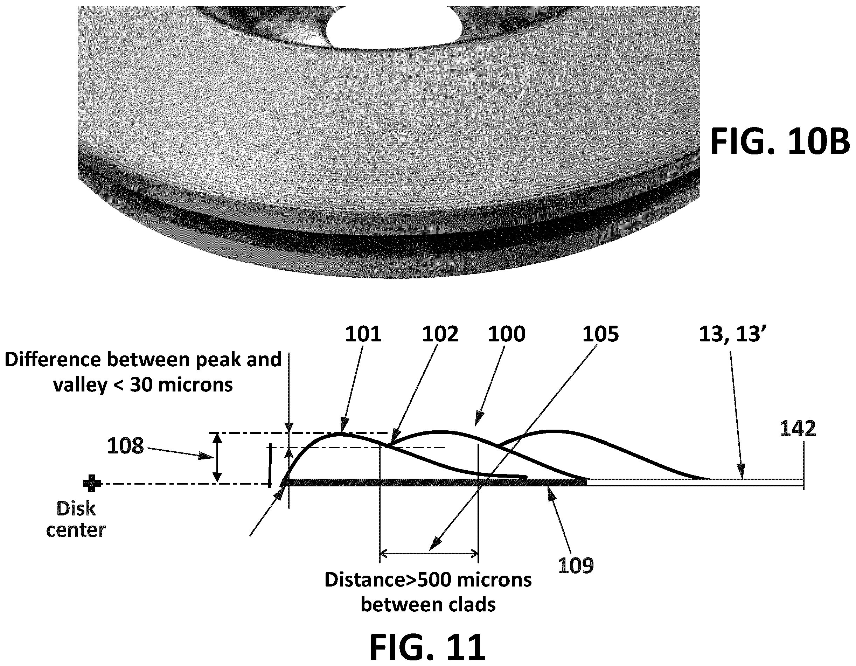

Applying the disclosed laser cladding deposition process following the laser cleaning process manages to obtain a substantially flat coating layer with respect to a coating layer applied without a previous laser cleaning process as the one previously disclosed. Figure 11 schematically shows the shape (outline) of the metal-based clad 100 (deposited in the form of a "cord") formed on the substrate while the powder is being deposited following the disclosed laser cladding deposition process in which the axis 71 of the powder spot 40 has been decentered with respect to the axis 73 of the laser beam and laser spot 30. It has been observed that, for a coating layer having a thickness 108 of for example between about 120 and about150 µm, the difference between peaks 101 and valleys 102 on the surface of the clad 100 does usually not exceed about 30 µm.

The distance 105 between consecutive clads (deposited powder spots) is usually larger than 500 µm when the diameters of laser spot and powder spot are larger than 1.5 mm. The laser heating (thermal treatment) performed during the laser cladding deposition process, immediately before the powder deposition, is referred to as 109.

Like in the laser cleaning stage shown in Figures 2A-2B and 3A-3B, the laser cladding deposition process can be applied either perpendicularly to the surface under treatment (see for example Figure 3A, which is applicable to the deposition process, assuming that in Figure 3A the powder nozzle is not shown) or with a certain tilting between the surface under treatment and the laser beam and powder deposition (see for example Figure 3B, again assuming that in Figure 3B the powder nozzle is not shown). The tilting can be achieved either by tilting the plane on which the surface to be treated lies with respect to a plane perpendicular to the laser beam (as shown in Figure 3B), or by tilting the nozzle and laser head (which travel together and maintain a fixed relative position between each other) with respect to a horizontal plane on which the substrate lies (not shown). Preferably, the tilting angle is comprised in the range of 0 and about 30 degrees, 0° corresponding to the laser beam being perpendicular to the surface under treatment.

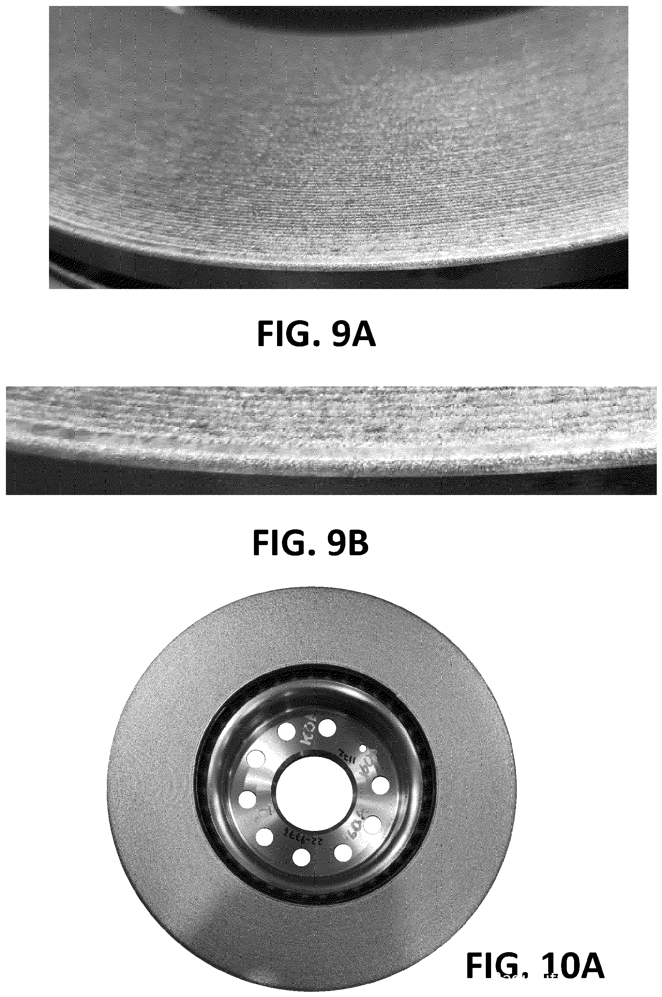

A sixth experiment has been made with the brake disk of Figure 1A, after applying the laser treatment of the first experiment. In the sixth experiment, a coating layer has been deposited applying a laser cladding process as disclosed. The laser cladding process to deposit the coating layer has been applied with the following process parameters: laser type: top hat; circular laser beam; diameter of laser beam = 2.7 mm; power = 7.6 kW; velocity = 150 m/min; cycle time = 30 s; applied density of energy: 39,821.48 J/mm²; diameter of powder spot = 2.2 mm; flow rate of powder = 90 g/min; type of gas: N₂; carrier gas flow = 10 I/min; shielding gas: N₂; shielding gas flow = 20 I/min; type of powder: AISI 316L (diameter of particles varying in the range of 20-53 µm); powder supplier: Höganäs. The axis of the powder cone was decentered with respect to the axis of the laser beam about 400 µm. Figure 9A shows a photograph of the surface of the brake disk of Figure 1B after the deposition of the first coating layer. Figure 9B shows a zoomed portion of the photograph of Figure 9A. The substantially flat coating layer can be macroscopically appreciated. The flatness and defects free (no holes and cracks are found) of the coating layer proves its quality and correct integration with the substrate. A suitable first coating layer made of AISI 316L has been obtained. Its thickness is 100 µm ±40 µm.

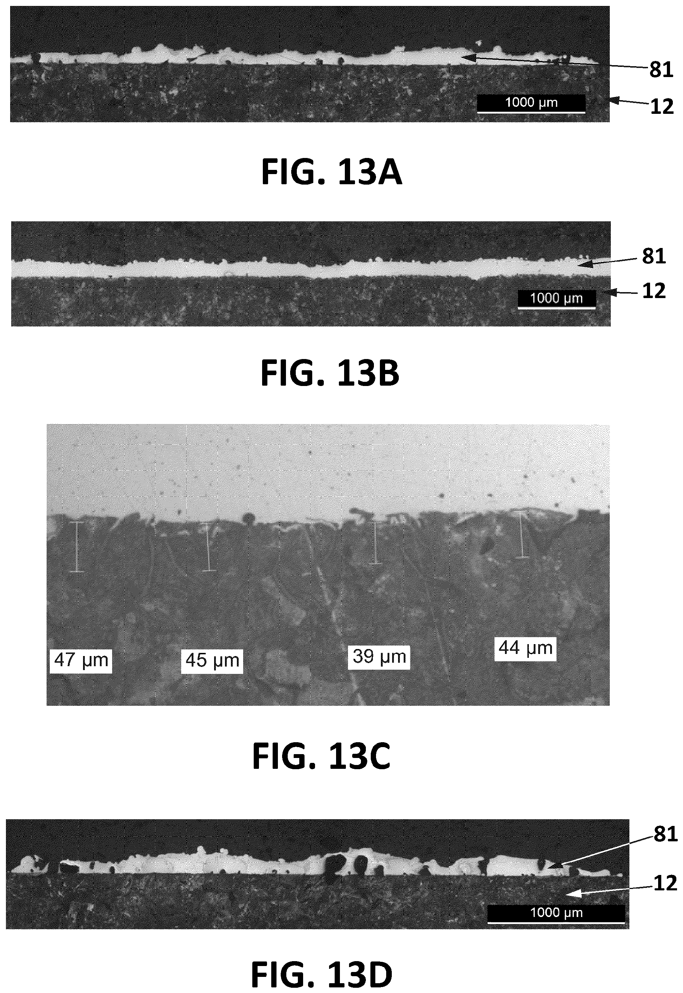

Figures 13B and 13C show microscope images of the brake disk after applying a single coating layer following the sixth experiment. Figure 13C shows a detail of Figure 13B. It can be observed that the coating layer 81 is free of holes or bubbles and the coating layer 81 is well integrated with the substrate 12. This good performance is achieved thanks to the combination of the precleaning process and the misalignment of powder spot and laser spot during the powder deposition process. Holes left by the evaporation of graphite in the laser cleaning pretreatment enhance the contact surface and are filled with metal-based material during the deposition process. The heating applied to the surface immediately before receiving the molten powder during the deposition process also contributes to prevent the appearance of additional holes or bubbles caused by the explosion of additional graphite. In Figure 13C the interface between the coating layer 81 and the substrate 12 of Figure 13B is shown enlarged. It can be observed that the area of the substrate thermically affected by the laser processes has a maximum thickness of 47 µm (worst case). The resulting brake disk thus has improved resistance to wear and friction coefficient.

The results (Figures 13B-13C) of the sixth experiment can be compared with experiments made with a brake disk of same characteristics (material and dimensions) and same laser deposition process of the sixth experiment (laser type: top hat; circular laser beam; diameter of laser spot = 2.7 mm; power = 7.6 kW; velocity = 150 m /min; cycle time = 30 s; applied density of energy: 39,821.48 J/mm²; diameter of powder spot = 2.2 mm; flow rate of powder = 90 g/min; type of gas: N₂; carrier gas flow = 10 I/min; shielding gas: N₂; shielding gas flow = 20 I/min; type of powder: AISI 316L (diameter of particles varying in the range of 20-53 µm); powder supplier: Höganäs) but with some differences. In the experiment shown in Figure 13A (microscope image) the coating layer has been applied to a brake disk to which a laser cleaning treatment according to the first experiment had been previously applied, but in the laser cladding process the axis of the powder spot was aligned with respect to the axis of the laser beam and laser spot. In the experiment shown in Figure 13D (microscope image) the coating layer has been applied to a brake disk to which no previous laser cleaning treatment had been applied and in the laser cladding process the axis of the powder spot was aligned with respect to the axis of the laser beam and laser spot.

The sample of Figure 13D performs very poorly. In the coating layer 81 many holes can be observed. There are also holes or bubbles in the interface between the coating layer 81 and the substrate 12, causing the bad integration between the coating layer and the substrate. The holes or bubbles have been created due to the explosion of graphite lamellae during the powder deposition process. The samples of Figures 13A-13B perform better than the sample of Figure 13D. In both cases a cleaning stage according to this disclosure was applied prior to the deposition process. They differ in the decentering of the axes applied in the experiment of Figure 13B. Figure 13B shows optimal performance in terms of the coating layer 81 being free of holes or bubbles and the coating layer 81 being well integrated with the substrate 12. This optimization is achieved thanks to the combination of the precleaning process and the misalignment of powder spot and laser spot during the powder deposition process. Figure 13A shows a relatively good performance, although not so good as that of Figure 13B. The precleaning process enables a substantial reduction of holes or bubbles in the coating layer 81 with respect to a sample with no precleaning process (Figure 13D). It also reduces the probability of evaporating graphite during the deposition process of the metal-based coating layer. However, in Figure 13A it can be observed that the application of powder deposition on the surface without a laser preheating immediately before (no misalignment of axes) causes an undesired displacement of the deposited material on the surface of the substrate due to the stress suffered by the material just deposited on the substrate, hindering the integration and adherence of the material with the substrate and provokes the explosion of graphite (abrupt evaporation) still present in the substrate, causing some holes in the coating layer and poor contact between the coating layer and the substrate.

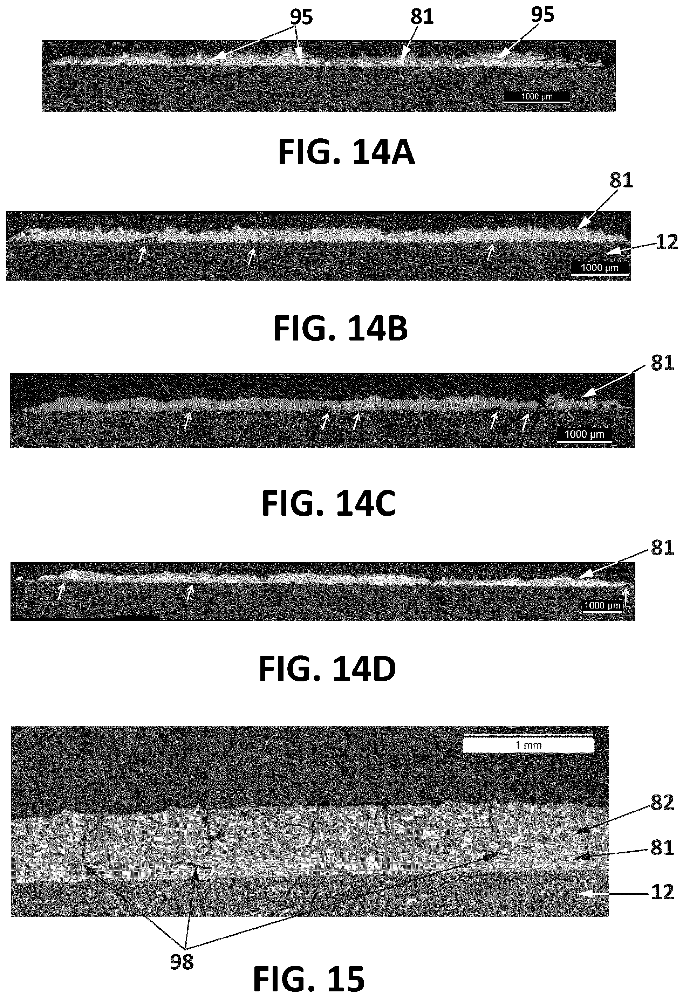

Figures 14A to 14D show more images of the sample of Figure 13A (brake disk to which a laser cleaning treatment has been applied and then a laser cladding process has been applied to deposit a coating layer, but without misalignment between the axis of the powder spot and the axis of the laser beam and laser spot). Due to the applied cleaning process prior to the laser deposition process, substantially no holes are observed in the coating layer 81, due to which good performance of the coated brake disk is to be expected. However, in Figure 14A certain alterations in the coating layer 81 are observed, showing that the material is not well integrated with itself in certain areas 95. In Figures 14B to 14D certain defects in the interface between the coating layer 81 and the substrate 12 are observed, showing that the material applied to coat the substrate cannot integrate well with the substrate, thus causing poor contact between the coating layer and the substrate. These defects are due to the stress caused to the material during the deposition process in which no misalignment of axis has been made.

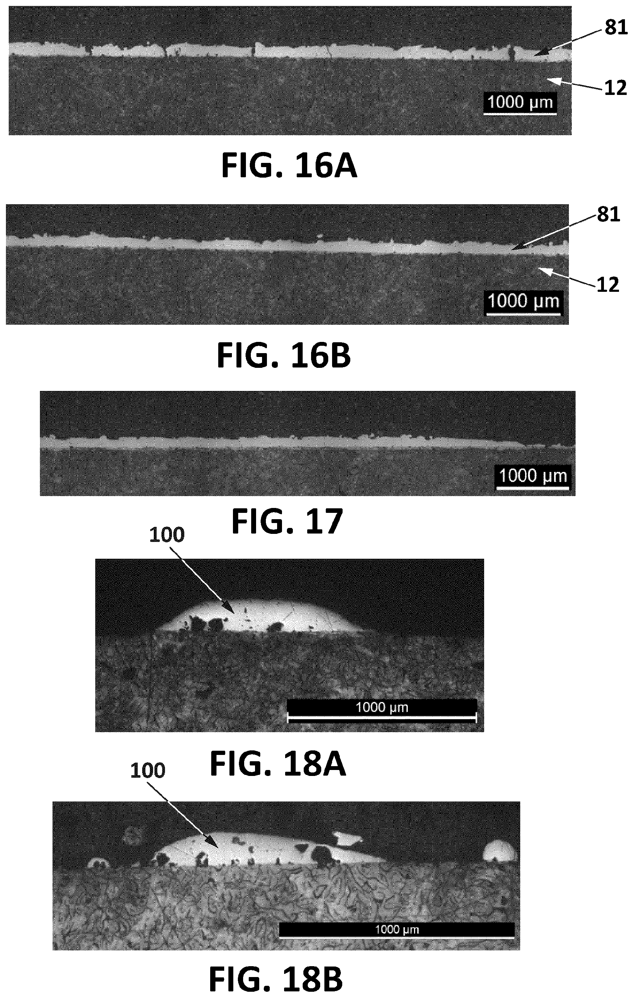

The poor integration and adherence of the coating material when no precleaning process nor decentering of axes in the laser cladding process are applied, can be observed in Figures 18A and 18B, which show cross-sectional views of a clad 100 made of AISI 316L deposited on a grey-cast iron substrate to which no laser precleaning has been applied nor misalignment of the powder spot axis with respect to the laser spot axis. Holes left open by the explosion of graphite during the laser cladding process can be observed.

A seventh experiment has been made with a brake disk like the one in Figure 4G, without (Figure 16A) and with (Figure 16B) precleaning process. In both cases a single coating layer has been deposited applying the following laser cladding process: laser type: top hat; circular laser beam; diameter of laser spot = 3.3 mm; power = 8.25 kW; velocity = 120 m/min; cycle time = 30 s; applied density of energy: 28,937.26 J/mm²; diameter of powder spot = 2.8 mm; flow rate of powder = 105 g/min; type of gas: N₂; carrier gas flow = 11 I/min; shielding gas: N₂; shielding gas flow = 8 I/min; type of powder: AISI 316L (stainless steel) (diameter of particles varying in the range of 20-53 µm). A suitable coating layer made of AISI 316L has been obtained. Its thickness is 100 µm ±40 µm.

In Figure 16B (microscope image) the mentioned coating layer has been applied to a brake disk to which a laser cleaning treatment had been previously applied with the following parameters: laser type: top hat; circular laser beam; diameter of laser beam = 3.3 mm; power = 5 kW; velocity = 170 m/min; cycle time = 30 s; type of gas: N₂; shielding gas flow = 15 I/min; density of energy of the applied laser beam = 17,537.73 J/mm². In Figure 16A (microscope image) the coating layer has been applied to a brake disk to which no previous laser cleaning treatment had been applied. In both cases, in the laser cladding process the axis of the powder spot was misaligned (decentered) with respect to the axis of the laser beam and laser spot about 400 µm.

The sample of Figure 16B shows optimal performance. The coating layer 81 is free of holes and is well integrated with the substrate 12. This optimization is achieved thanks to the combination of the precleaning process and the misalignment of powder spot and laser spot during the powder deposition process. The precleaning process causes evaporation of graphite lamellae in the vicinity of the surface of the substrate, leaving holes that can be filled with material being deposited during the laser deposition process. The laser deposition process applied with misalignment of the axes enables the surface to be heated just before molten metal is received thereon, which prevents or at least reduces the appearance of additional holes or bubbles caused by the explosion of additional graphite. The resulting brake disk thus has improved resistance to wear and friction coefficient.

An eighth experiment has been made with a brake disk like the one shown in Figure 1A. The following operational parameters were applied: applied laser power = 9000 W, cycle time = 30 s, circular laser spot, diameter of laser spot = 3.3 mm and applied density of energy = 31567.92 J/mm². The axis of the laser beam was misaligned with respect to the axis of the powder nozzle about 400 µm. A suitable coating layer made of AISI 430L has been obtained. Its thickness is 100 µm ±40 µm. Figure 17 shows a microscope image of the obtained coating layer.

Optionally, a second coating layer can be applied on the first coating layer following a similar process as the one used to deposit the first coating layer. The schematic process shown in Figures 8A and 8B are also applicable to deposit the second coating layer.

A ninth experiment has been made with a brake disk like the one in Figure 1A, after applying the laser cleaning treatment of the first experiment and the first coating layer of Figures 9A-9B (sixth experiment). In the ninth experiment, a second coating layer has been deposited on the first one applying a laser cladding process as disclosed. The laser cladding process to deposit the second coating layer has been applied with the following process parameters: laser type: top hat; circular laser beam; diameter of laser beam = 2.7 mm; power = 7.75 kW; velocity = 80 m /min; type of gas: N₂; carrier gas flow = 15 I/min; shielding gas flow = 20 I/min; diameter of powder spot = 2.2 mm; flow rate of powder = 90 g/min; cycle time = 40 s; applied density of energy: 54,143,25J/mm²; type of powder is a mix of: AISI 316L and tungsten carbides WC (20-53 µm); powder supplier: Höganäs for AISI 316L and C&M for WC. The axis of the laser beam was misaligned with respect to the axis of the powder nozzle about 400 microns. A suitable second coating layer made of a mix of AISI 316L and WC has been obtained. Its thickness is of 180 µm ±20 µm. Figure 10A shows a photograph of the brake disk of Figure 9A after the application of the second coating layer. Figure 10B shows a zoomed portion of the photograph of Figure 10A. The substantially flat coating layer can be macroscopically appreciated. The flatness and defects free (no holes and cracks are found) of the coating layer proves its quality and correct integration with the first coating layer.

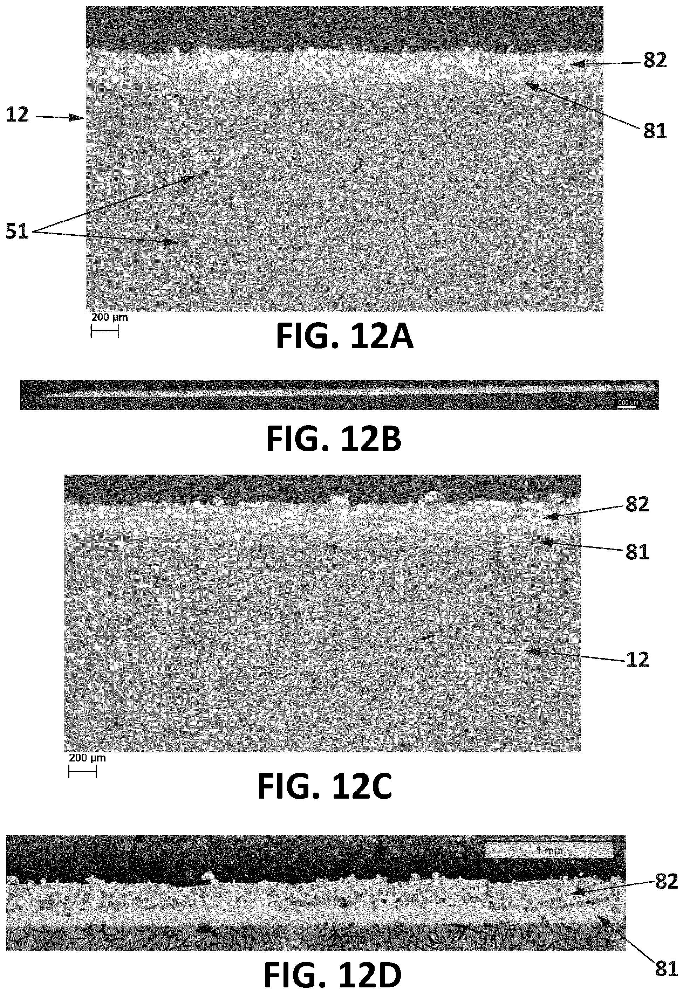

Figures 12A and 12C show SEM images of two exemplary cross sections of the substrate of the disk of Figure 10A (to which a laser cleaning process and two coating layers have been applied). Figures 12B and 12D show images taken with an optical microscope of the same substrate of the disk of Figure 10A. The resolution of Figures 12A and 12C is five times smaller than the resolution of Figures 12B and 12D. In Figures 12A and 12C the substrate 12 occupies most of the image. In the substrate 12, graphite lamellae 51 are present (in dark grey colour). This means that the structure of the substrate has been correctly preserved after the cleaning and cladding processes. It is also observed that the first coating layer 81 is substantially free of graphite. This is because the applied laser cleaning process firstly applied, as well as the additional laser heating applied just before applying the metal-based powder by misaligning the powder cone axis with respect to the axis of the laser beam during the first laser cladding process, have managed to reduce the amount of graphite from the surface of the substrate. In the second coating layer 82, the white spots represent the carbide present in this layer. In the first and second coating layers 81, 82 the grey colour represents the metal base of the layer. It can be observed that both layers are substantially free of graphite.

A tenth experiment has been made to compare the results of the ninth experiment (second coating layer applied using misaligned axes) with the application of a second coating layer on a similar brake disk (after applying the laser cleaning treatment of the first experiment and the first coating layer of the sixth experiment, Figures 9A-9B), but in this case without misalignment between the axis of the powder spot and the axis of the laser beam and laser spot. Like in the ninth experiment, the laser cladding process to deposit the second coating layer has been applied with the following process parameters: laser type: top hat; circular laser beam; diameter of laser beam = 2.7 mm; power = 7.75 kW; velocity = 80 m/min; type of gas: N₂; carrier gas flow = 15 I/min; shielding gas flow = 20 I/min; diameter of powder spot = 2.2 mm; flow rate of powder = 90 g/min; cycle time = 40 s; applied density of energy: 54,143,25J/mm²; type of powder is a mix of: AISI 316L and tungsten carbides WC (20-53 µm); powder supplier: Höganäs for AISI 316L and C&M for WC. In this case the axis of the laser beam was not misaligned with respect to the axis of the powder nozzle. A second coating layer made of a mix of AISI 316L and WC has been obtained. Figure 15 shows an image of the sample of Figures 9A-9B to which this second coating layer 82 has been applied. Certain detects 98 in the interface between the two layers 81, 82 are observed, showing that the material of the second coating layer 82 cannot integrate well with the first coating layer 81. These defects are due to the stress caused to the material during the deposition process.

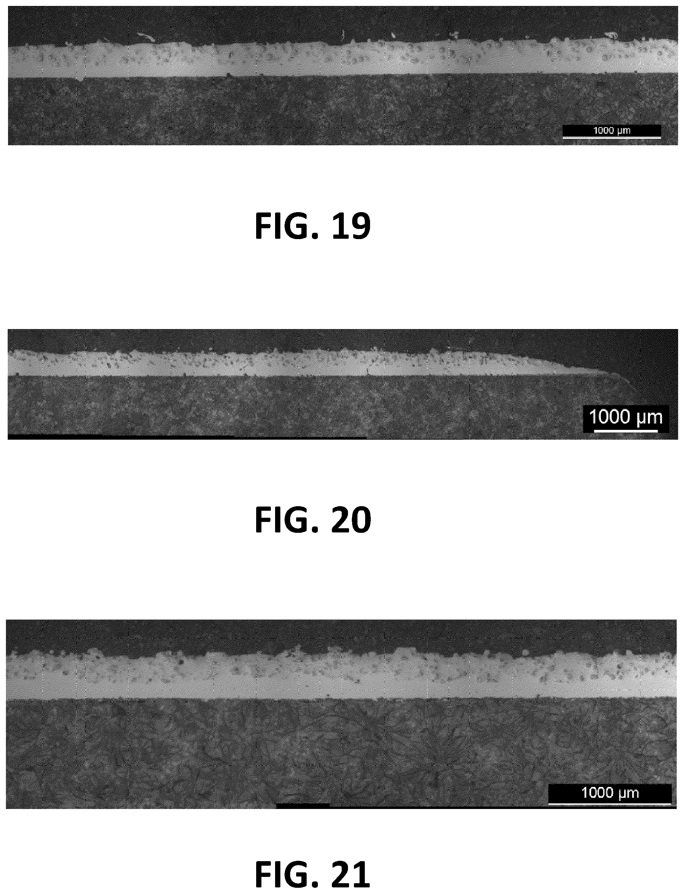

An eleventh experiment has been made to deposit a second coating layer on a surface of a brake disk like the one in Figure 1A, on which a first coating layer had been already deposited. No laser cleaning process had been applied prior the deposition of the first coating layer. The laser cladding process to deposit the first coating layer has been applied with the following process parameters: Applied laser = 8750 W, cycle time = 30 s, circular laser spot, diameter of laser spot = 3.3 mm and applied density of energy = 30691.04J/mm². The axis of the laser beam was misaligned with respect to the axis of the powder nozzle about 400 microns. A suitable first coating layer made of AISI 316L has been obtained. Its thickness is 100 µm ±40 µm. The laser cladding process to deposit the second coating layer has been applied with the following process parameters: Applied laser = 8850 W, cycle time = 46 s, circular laser spot, diameter of laser spot = 3.3 mm and applied density of energy = 47597.41 J/mm2. The axis of the laser beam was misaligned with respect to the axis of the powder nozzle about 400 microns. On top of the first coating layer, a suitable second coating layer made of AISI 316L+WC has been obtained. Its thickness is of 180 ±40 µm. Figure 19 shows a cross-sectional view of the substrate and the applied two coating layers.

A 12th experiment has been made to deposit a second coating layer on a surface of a brake disk like the one in Figure 1A, on which a first coating layer had been already deposited. No laser cleaning process had been applied prior the deposition of the first coating layer. The laser cladding process to deposit the first coating layer has been applied with the following process parameters: Applied laser = 9000 W, cycle time = 30 s, circular laser spot, diameter of laser spot = 3.3 mm and applied density of energy = 31567.92 J/mm². The axis of the laser beam was misaligned with respect to the axis of the powder nozzle about 400 microns. A suitable first coating layer made of AISI 430L has been obtained. Its thickness is 100 µm ±40 µm. The laser cladding process to deposit the second coating layer has been applied with the following process parameters: Applied laser power = 9 kW, cycle time = 46 s, circular laser spot, diameter of laser spot = 3.3 mm and applied density of energy = 48404.15 J/mm2. The axis of the laser beam was misaligned with respect to the axis of the powder nozzle. A suitable second coating layer made of AISI 430L+TiC has been obtained, having thickness of 180 ±40 µm. Figure 20 shows a cross-sectional view of the substrate and the applied two coating layers.

A 13th experiment has been made to deposit a second coating layer on a surface of a brake disk like the one in Figure 1A, on which a first coating layer had been already deposited. No laser cleaning process had been applied prior the deposition of the first coating layer. The laser cladding process to deposit the first coating layer has been applied with the following process parameters: Applied laser = 11500 W, cycle time = 34 s, circular laser spot, diameter of laser spot = 3.3 mm and applied density of energy = 45715,03 J/mm². The axis of the laser beam was misaligned with respect to the axis of the powder nozzle about 400 microns. A suitable first coating layer made of AISI 430L has been obtained. Its thickness is 100 µm ±40 µm. The laser cladding process to deposit the second coating layer has been applied with the following process parameters: power =11500 W, cycle time = 34 s, circular laser spot, diameter of laser spot = 3.3 mm and applied density of energy = 45715.03 J/mm². A suitable second coating layer made of AISI 430L+TiCFeCr has been obtained, having thickness of 180 ±40 µm. Figure 21 shows a cross-sectional view of the substrate and the applied two coating layers.

In this text, the term "comprises" and "includes" and their derivations (such as "comprising", "including", etc.) should not be understood in an excluding sense, that is, these terms should not be interpreted as excluding the possibility that what is described and defined may include further elements, steps, etc.

The term "about" when used in the context of the present invention preceding a number and referring to it, is to be understood as designating any value lying within the range defined by the number ±5 %, more preferably a range defined by the number ±2 %. For example, the expression "about 10" should be construed as "within the range of 9.5 to 10.5", preferably "within the range of 9.8 to 10.2".

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for manufacturing a brake disk, comprising:
providing a substrate (12) of a brake disk, the substrate (12) being made of a graphite-containing metallic material, the substrate (12) defining a surface (13, 13');
removing graphite from the surface (13, 13') of the substrate (12) by applying a cleaning stage in which the surface is radiated with a laser beam emitting with a power comprised in the range of between 2 and 12 kW with a diameter of the laser spot comprised in the range of between 1.5 and 4 mm;
depositing a metal-based coating layer onto the surface (13, 13') of the substrate (12) from which graphite has been removed by applying a laser cladding deposition process.

2. The method of claim 1, wherein the substrate is made of grey cast iron.

3. The method of any one of claims 1-2, wherein during the application of the cleaning stage and/or during the deposition of a metal-based coating layer, the substrate (12) of the brake disk rotates while a laser head from which the laser beam is emitted moves linearly on the surface (13) of the substrate (12), said linear movement following a radial trajectory on the surface of the substrate.

4. The method of claim 3, wherein the brake disk rotates at a linear velocity comprised in the range of 80 and 240 m/minute, more preferably in the range of 120 and 200 m/minute.

5. The method of any one of claims 1-5, wherein during the application of the cleaning stage and/or during the deposition of a metal-based coating layer, a shielding gas is emitted onto the surface of the substrate while the surface is radiated with the laser beam, wherein the shielding gas is Nitrogen or Argon.

6. The method of any one of claims 1-5, wherein in the cleaning stage the surface is radiated with a laser beam emitting with a power comprised in the range of between 4 and 8 kW, more preferably between 5 and 7 kW.

7. The method of any one of claims 1-6, wherein in the cleaning stage the diameter of the laser spot used to remove graphite is in a range between 2 and 4 mm, preferably between 2.2 and 3.7 mm and more preferably between 2.5 and 3.5 mm.

8. The method of any one of claims 1-7, wherein in the cleaning stage the laser beam provides a density of energy on the surface of the substrate in the range of between 10 and 45 kJ/mm².

9. The method of any one of claims 1-8, wherein in the laser cladding deposition process for depositing a metal-based coating layer onto the surface of the substrate from which graphite has been previously removed, powder is deposited using a laser beam with a diameter of a laser spot larger than a diameter of a powder spot to be applied to the surface, wherein the diameter of the laser spot is preferably between 10 and 40% larger than the diameter of the powder spot.

10. The method of claim 9, wherein the diameter of the laser spot used in the laser cladding process is in a range between 1.5 and 4 mm, preferably between 2 and 4 mm, more preferably between 2.2 and 3.7 mm, and still more preferably between 2.5 and 3.5 mm; and the diameter of the powder spot is in a range between 1 and 3.5 mm, preferably between 1 and 2.5 mm, and more preferably between 1 and 2 mm.

11. The method of any one of claims 9-10, wherein in the laser cladding deposition process for depositing a metal-based coating layer, the axis of the laser beam and therefore of the laser spot is misaligned with respect of the axis of the powder spot.

12. The method of claim 11, wherein the axis of the powder spot is misaligned with respect to the axis of the laser spot in an amount between 0 and 20% of the diameter of the laser spot, preferably between 2.5 and 15% thereof, more preferably between 5 and 12.5 thereof.

13. The method of any one of claims 1-12, wherein in the laser cladding deposition process for depositing a metal-based coating layer, the power of the laser beam is in a range between 6 kW and 16 kW, preferably between 7 kW and 12 kW, and more preferably between 7.5 and 10kW; and the cycle time is selected to be between 20 and 55 seconds.

14. The method of any one of claims 1-13, wherein in the laser cladding deposition process for depositing a metal-based coating layer, the diameter of the laser spot is comprised in the range of between 1.5 and 4 mm, preferably between 2 and 4 mm, more preferably between 2.2 and 3.7 mm and still more preferably between 2.5 and 3.5 mm.

15. The method of any one of claims 1-14, wherein in the laser cladding deposition process for depositing a metal-based coating layer, a density of energy on the surface of the substrate in the range of between 14 kJ/mm² and 50 kJ/mm² is applied.

16. The method of any one of claims 1-15, wherein in the laser cladding deposition process one single layer is deposited, the one single layer being preferably made of a mix of a metal and a carbide, wherein the metal is preferably steel and the carbide is preferably tungsten carbide or titanium carbide.

17. The method of any one of claims 1-16, further comprising applying a second laser cladding deposition process to deposit a second metal-based coating layer onto the first metal-based coating layer.

18. The method of claim 17, wherein in the laser cladding deposition process for depositing a second metal-based coating layer, the power of the laser beam is in a range between 7 and 18 kW, preferably between 7.5 and 14 kW, and more preferably between 7.5 and 12kW; and the cycle time is selected to be between 20 and 55 seconds.

19. The method of either claim 17 or 18, wherein in the second laser cladding deposition process for depositing the second metal-based coating layer, a density of energy on the surface of the substrate in the range of between 25 and 70 kJ/mm² is applied.

20. The method of any one of claims 17-19, wherein in the first laser cladding deposition process a layer made of metal, preferably steel, is applied; and in the second laser cladding deposition process a layer made of a mix of a metal and a carbide, wherein the metal is preferably steel and the carbide is preferably tungsten carbide or titanium carbide, is applied.

## Patentansprüche

1. Verfahren zur Herstellung einer Bremsscheibe, das aufweist:
Bereitstellen eines Substrats (12) einer Bremsscheibe, wobei das Substrat (12) aus einem graphitenthaltenden metallischen Material hergestellt ist, wobei das Substrat (12) eine Oberfläche (13, 13') definiert;
Entfernen von Graphit von der Oberfläche (13, 13') des Substrats (12) durch Anwenden einer Reinigungsstufe, in welcher das Substrat mit einem Laserstrahl bestrahlt wird, welcher mit einer Leistung im Bereich zwischen 2 und 12 kW emittiert, wobei ein Durchmesser des Laserbrennflecks im Bereich zwischen 1,5 und 4 mm liegt;
Abscheiden einer metallbasierten Überzugschicht auf der Oberfläche (13, 13') des Substrats (12), von der Graphit entfernt wurde, durch Anwenden eines Laserauftragschweiß-Abscheidungsverfahrens.

2. Verfahren nach Anspruch 1, wobei das Substrat aus Grauguss hergestellt ist.

3. Verfahren nach einem der Ansprüche 1 - 2, wobei sich das Substrat (12) der Bremsscheibe während der Anwendung der Reinigungsstufe und/oder während der Abscheidung einer metallbasierten Überzugschicht dreht, während ein Laserkopf, von dem der Laserstrahl emittiert wird, sich linear auf der Oberfläche (13) des Substrats (12) bewegt, wobei diese lineare Bewegung einer radialen Trajektorie auf der Oberfläche des Substrats folgt.

4. Verfahren nach Anspruch 3, wobei die Bremsscheibe sich mit einer Lineargeschwindigkeit dreht, die im Bereich von 80 bis 240 m/Minute, bevorzugt im Bereich von 120 bis 200 m/Minute liegt.

5. Verfahren nach einem der Ansprüche 1 - 5, wobei während der Anwendung der Reinigungsstufe und/oder während der Abscheidung der metallbasierten Überzugschicht ein Schutzgas auf die Oberfläche des Substrats emittiert wird, während die Oberfläche mit dem Laserstrahl bestrahlt wird, wobei das Schutzgas Stickstoff oder Argon ist.

6. Verfahren nach einem der Ansprüche 1 - 5, wobei die Oberfläche in der Reinigungsstufe mit einem Laserstrahl bestrahlt wird, der mit einer Leistung im Bereich von 4 bis 8 kW, bevorzugt zwischen 5 und 7 kW emittiert.

7. Verfahren nach einem der Ansprüche 1 - 6, wobei der Durchmesser des Laserbrennflecks, der verwendet wird, um Graphit zu entfernen, in der Reinigungsstufe in einem Bereich zwischen 2 und 4 mm, vorzugsweise zwischen 2,2 und 3,7 mm und noch besser zwischen 2,5 und 3,5 mm liegt.

8. Verfahren nach einem der Ansprüche 1 - 7, wobei der Laserstrahl in der Reinigungsstufe eine Energiedichte auf der Oberfläche des Substrats im Bereich von 10 bis 45 KJ/mm² bereitstellt.

9. Verfahren nach einem der Ansprüche 1 - 8, wobei in dem Laserauftragschweiß-Abscheidungsverfahren zum Abscheiden einer metallbasierten Überzugschicht auf der Oberfläche des Substrats, von der vorher Graphit entfernt wurde, Pulver unter Verwendung eines Laserstrahls mit einem Laserbrennfleck abgeschieden wird, der einen größeren Durchmesser als einen Durchmesser eines Pulverflecks, der auf die Oberfläche aufgebracht werden soll, hat, wobei der Durchmesser des Laserbrennflecks vorzugsweise zwischen 10 und 40% größer als der Durchmesser des Pulverflecks ist.

10. Verfahren nach Anspruch 9, wobei der Durchmesser des in dem Laserauftragschweißverfahrens verwendeten Laserbrennflecks in einem Bereich zwischen 1,5 und 4 mm, vorzugsweise zwischen 2 und 4 mm, besser zwischen 2,2 und 3,7 und noch besser zwischen 2,5 und 3,5 mm liegt; und wobei der Durchmesser des Pulverflecks im Bereich zwischen 1 und 3,5 mm, bevorzugt zwischen 1 und 2,5 mm und besser zwischen 1 und 2 mm liegt.

11. Verfahren nach einem der Ansprüche 9 - 10, wobei in dem Laserauftragschweiß-Abscheidungsverfahren zum Abscheiden einer metallbasierten Überzugschicht die Achse des Laserstrahls und daher des Laserbrennflecks in Bezug auf die Achse des Pulverflecks versetzt ist.

12. Verfahren Anspruch 11, wobei die Achse des Pulverflecks in Bezug auf die Achse des Laserbrennflecks um einen Betrag zwischen 0 und 20% des Durchmessers des Laserbrennflecks, vorzugsweise zwischen 2,5 und 15% davon, besser zwischen 5 und 12,5% davon, versetzt ist.

13. Verfahren nach einem der Ansprüche 1 - 12, wobei die Leistung des Laserstrahls in dem Laserauftragschweiß-Abscheidungsverfahren zum Abscheiden einer metallbasierten Überzugschicht in einem Bereich zwischen 6 kW und 16 kW, bevorzugt zwischen 7 kW und 12 kW und besser zwischen 7,5 und 10 kW liegt, und wobei die Taktzeit zwischen 20 und 55 Sekunden liegt.

14. Verfahren nach einem der Ansprüche 1 - 13, wobei der Durchmesser des Laserbrennflecks in dem Laserauftragschweiß-Abscheidungsverfahren zum Abscheiden einer metallbasierten Überzugschicht im Bereich zwischen 1,5 und 4 mm, vorzugsweise zwischen 2 und 4 mm, besser zwischen 2,2 und 3,7 und noch besser zwischen 2,5 und 3,5 mm liegt.

15. Verfahren nach einem der Ansprüche 1 - 14, wobei in dem Laserauftragschweiß-Abscheidungsverfahren zum Abscheiden einer metallbasierten Überzugschicht eine Energiedichte auf der Oberfläche des Substrats im Bereich zwischen 14 kJ/mm² und 50 kJ/mm2 angewendet wird.

16. Verfahren nach einem der Ansprüche 1 - 15, wobei in dem Laserauftragschweiß-Abscheidungsverfahren eine einzelne Schicht abgeschieden wird, wobei die einzelne Schicht vorzugsweise aus einer Mischung aus einem Metall und einem Karbid hergestellt ist, wobei das Metall bevorzugt Stahl ist und das Karbid bevorzugt Wolframkarbid oder Titankarbid ist.

17. Verfahren nach einem der Ansprüche 1 - 16, welches ferner das Anwenden eines zweiten Laserauftragschweiß-Abscheidungsverfahrens aufweist, um eine zweite metallbasierte Überzugschicht auf der ersten metallbasierten Überzugschicht abzuscheiden.

18. Verfahren nach Anspruch 17, wobei die Leistung des Laserstrahls in dem zweiten Laserauftragschweiß-Abscheidungsverfahren zum Abscheiden einer zweiten metallbasierten Überzugschicht in einem Bereich zwischen 7 und 18 kW, bevorzugt zwischen 7,5 und 14 kW und besser zwischen 7,5 und 12 kW liegt; und wobei die Taktzeit zwischen 20 und 55 Sekunden ausgewählt wird.

19. Verfahren nach Anspruch 17 oder 18, wobei in dem zweiten Laserauftragschweiß-Abscheidungsverfahren zum Abscheiden der zweiten metallbasierten Überzugschicht eine Energiedichte auf der Oberfläche des Substrats im Bereich zwischen 25 und 70 kJ/mm² angewendet wird.

20. Verfahren nach einem der Ansprüche 17 - 19, wobei in dem ersten Laserauftragschweiß-Abscheidungsverfahren eine aus Metall, vorzugsweise Stahl, hergestellte Schicht aufgebracht wird, und in dem zweiten Laserauftragschweiß-Abscheidungsverfahren eine Schicht, die aus einer Mischung aus einem Metall und einem Karbid hergestellt ist, aufgebracht wird, wobei das Metall bevorzugt Stahl ist und das Karbid bevorzugt Wolframkarbid oder Titankarbid ist.

## Revendications

1. Procédé de fabrication d'un disque de frein, comprenant :
la fourniture d'un substrat (12) d'un disque de frein, le substrat (12) étant réalisé en un matériau métallique contenant du graphite, le substrat (12) définissant une surface (13, 13') ;
le retrait du graphite de la surface (13, 13') du substrat (12) en appliquant une étape de nettoyage dans laquelle la surface est irradiée avec un faisceau laser émettant avec une puissance comprise dans la plage entre 2 et 12 kW avec un diamètre de la tache laser compris dans la plage entre 1,5 et 4 mm ;
le dépôt d'une couche de revêtement à base de métal sur la surface (13, 13') du substrat (12) à partir de laquelle le graphite a été retiré en appliquant un procédé de dépôt par rechargement laser.

2. Procédé selon la revendication 1, dans lequel le substrat est réalisé en fonte grise.

3. Procédé selon l'une quelconque des revendications 1 et 2, dans lequel, pendant l'application de l'étape de nettoyage et/ou pendant le dépôt d'une couche de revêtement à base de métal, le substrat (12) du disque de frein tourne tandis qu'une tête laser à partir de laquelle le faisceau laser est émis se déplace linéairement sur la surface (13) du substrat (12), ledit mouvement linéaire suivant une trajectoire radiale sur la surface du substrat.

4. Procédé selon la revendication 3, dans lequel le disque de frein tourne à une vitesse linéaire comprise dans la plage de 80 à 240 m/minute, plus préférablement dans la plage de 120 à 200 m/minute.

5. Procédé selon l'une quelconque des revendications 1 à 5, dans lequel, pendant l'application de l'étape de nettoyage et/ou pendant le dépôt d'une couche de revêtement à base de métal, un gaz de protection est émis sur la surface du substrat tandis que la surface est irradiée avec le faisceau laser, où le gaz de protection est de l'azote ou de l'argon.

6. Procédé selon l'une quelconque des revendications 1 à 5, dans lequel, dans l'étape de nettoyage, la surface est irradiée avec un faisceau laser émettant avec une puissance comprise dans la plage entre 4 et 8 kW, plus préférablement entre 5 et 7 kW.

7. Procédé selon l'une quelconque des revendications 1 à 6, dans lequel, dans l'étape de nettoyage, le diamètre de la tache laser utilisée pour retirer le graphite se trouve dans une plage entre 2 et 4 mm, de préférence entre 2,2 et 3,7 mm, et plus préférablement entre 2,5 et 3,5 mm.

8. Procédé selon l'une quelconque des revendications 1 à 7, dans lequel, dans l'étape de nettoyage, le faisceau laser fournit une densité d'énergie sur la surface du substrat dans la plage entre 10 et 45 kJ/mm².

9. Procédé selon l'une quelconque des revendications 1 à 8, dans lequel, dans le procédé de dépôt par rechargement laser pour déposer une couche de revêtement à base de métal sur la surface du substrat à partir de laquelle le graphite a été précédemment retiré, de la poudre est déposée en utilisant un faisceau laser ayant un diamètre de tache laser supérieur à un diamètre d'une tache de poudre à appliquer à la surface, où le diamètre de la tache laser est de préférence supérieur de 10 à 40% au diamètre de la tache de poudre.

10. Procédé selon la revendication 9, dans lequel le diamètre de la tache laser utilisée dans le procédé de rechargement laser se trouve dans une plage entre 1,5 et 4 mm, de préférence entre 2 et 4 mm, plus préférablement entre 2,2 et 3,7 mm, et encore plus préférablement entre 2,5 et 3,5 mm ; et
le diamètre de la tache de poudre se trouve dans une plage entre 1 et 3,5 mm, de préférence entre 1 et 2,5 mm, et plus préférablement entre 1 et 2 mm.

11. Procédé selon l'une quelconque des revendications 9 et 10, dans lequel, dans le procédé de dépôt par rechargement laser pour déposer une couche de revêtement à base de métal, l'axe du faisceau laser et donc de la tache laser est désaligné par rapport à l'axe de la tache de poudre.

12. Procédé selon la revendication 11, dans lequel l'axe de la tache de poudre est désaligné par rapport à l'axe de la tache laser d'une valeur comprise entre 0 et 20% du diamètre de la tache laser, de préférence entre 2,5 et 15% de celui-ci, plus préférablement entre 5 et 12,5 de celui-ci.

13. Procédé selon l'une quelconque des revendications 1 à 12, dans lequel, dans le procédé de dépôt par rechargement laser pour déposer une couche de revêtement à base de métal, la puissance du faisceau laser se trouve dans une plage entre 6 kW et 16 kW, de préférence entre 7 kW et 12 kW, et plus préférablement entre 7,5 et 10 kW; et le temps de cycle est sélectionné pour être compris entre 20 et 55 secondes.

14. Procédé selon l'une quelconque des revendications 1 à 13, dans lequel, dans le procédé de dépôt par rechargement laser pour déposer une couche de revêtement à base de métal, le diamètre de la tache laser est compris dans la plage entre 1,5 et 4 mm, de préférence entre 2 et 4 mm, plus préférablement entre 2,2 et 3,7 mm et encore plus préférablement entre 2,5 et 3,5 mm.

15. Procédé selon l'une quelconque des revendications 1 à 14, dans lequel, dans le procédé de dépôt par rechargement laser pour déposer une couche de revêtement à base de métal, une densité d'énergie sur la surface du substrat dans la plage entre 14 kJ/mm² et 50 kJ/mm² est appliquée.

16. Procédé selon l'une quelconque des revendications 1 à 15, dans lequel, dans le procédé de dépôt par rechargement laser, une seule couche est déposée, la seule couche étant de préférence réalisée en un mélange d'un métal et d'un carbure, où le métal est de préférence de l'acier et le carbure est de préférence du carbure de tungstène ou du carbure de titane.

17. Procédé selon l'une quelconque des revendications 1 à 16, comprenant en outre l'application d'un second procédé de dépôt par rechargement laser pour déposer une seconde couche de revêtement à base de métal sur la première couche de revêtement à base de métal.

18. Procédé selon la revendication 17, dans lequel, dans le procédé de dépôt par rechargement laser pour déposer une seconde couche de revêtement à base de métal, la puissance du faisceau laser se trouve dans une plage entre 7 et 18 kW, de préférence entre 7,5 et 14 kW, et plus préférablement entre 7,5 et 12 kW ; et le temps de cycle est sélectionné pour être compris entre 20 et 55 secondes.

19. Procédé selon la revendication 17 ou 18, dans lequel, dans le second procédé de dépôt par rechargement laser pour déposer la seconde couche de revêtement à base de métal, une densité d'énergie sur la surface du substrat dans la plage entre 25 et 70 kJ/mm² est appliquée.

20. Procédé selon l'une quelconque des revendications 17 à 19, dans lequel, dans le premier procédé de dépôt par rechargement laser, une couche réalisée en métal, de préférence de l'acier, est appliquée ; et dans le second procédé de dépôt par rechargement laser, une couche réalisée en un mélange d'un métal et d'un carbure, où le métal est de préférence de l'acier et le carbure est de préférence du carbure de tungstène ou du carbure de titane, est appliquée.
